(19) **Europäisches Patentamt**

**European Patent Office**

**Office européen des brevets**

(11) Numéro de publication : **0 401 192 B1**

(12) **FASCICULE DE BREVET EUROPEEN**

(45) Date de publication du fascicule du brevet :
**27.07.94 Bulletin 94/30**

(21) Numéro de dépôt : **90870083.4**

(22) Date de dépôt : **30.05.90**

(51) Int. Cl.⁵ : **G07B 15/00,** G07C 9/00,
G08G 1/123

(54) **Système de taxation ou péage automatique pour véhicules routiers.**

(30) Priorité : **02.06.89 BE 8900597**

(43) Date de publication de la demande :
**05.12.90 Bulletin 90/49**

(45) Mention de la délivrance du brevet :
**27.07.94 Bulletin 94/30**

(84) Etats contractants désignés :
**CH DE ES FR GB IT LI NL SE**

(56) Documents cités :
**EP-A- 0 061 373**
**EP-A- 0 159 539**
**WO-A-89/04093**
**FR-A- 2 593 306**
**FR-A- 2 594 985**
**FR-A- 2 620 551**

(56) Documents cités :
**US-A- 3 602 881**
**US-A- 4 277 837**
**US-A- 4 303 904**
**US-A- 4 325 146**
**US-A- 4 398 172**

(73) Titulaire : **de Baets, Thierry**
**Avenue Baden Powell, 6,**
**Bte 14**
**B-1200 Bruxelles (BE)**

(72) Inventeur : **de Baets, Thierry**
**Avenue Baden Powell, 6,**
**Bte 14**
**B-1200 Bruxelles (BE)**

(74) Mandataire : **Overath, Philippe et al**
**Cabinet Bede,**
**Place de l'Alma, 3**
**B-1200 Bruxelles (BE)**

Jouve, 18, rue Saint-Denis, 75001 PARIS

## Description

L'invention concerne un système permettant d'une part d'assurer un ensemble de fonctions destinées à la taxation et ou le péage automatique permettant d'acquitter des droits d'usage d'infrastructures routières, droits de passage d'accès et d'autre part de réaliser diverses fonctions qui pourraient s'avérer utiles dans le futur, comme éventuellement le repérage des véhicules volés.

L'accroissement du trafic routier incite les exploitants d'ouvrages d'art (concessionnaires) à rechercher des moyens pour assurer le péage automatique "au vol" pour réduire le temps d'attente et par conséquent, améliorer le débit du trafic aux heures de pointes en évitant les files d'attente ou bouchons aux postes de péages et d'en limiter les frais d'exploitation. Les autorités dans beaucoup de pays s'intéressent fortement à adapter la taxation des usagers selon leur utilisation du réseau routier et en particulier en fonction de certains critères tels que: surtaxation aux heures de pointe, accès limités dans les centres urbains, etc...

Pour qu'un système de taxation ou péage automatique puisse être généralisé, il est impératif, d'après les études faites par les autorités de plusieurs pays, que le système ne soit pas limité à une fonction spécifique mais par contre qu'il soit extensible à d'autres fonctions dans le futur et d'autre part qu'il garantisse, par son principe, l'anonymat des usagers s'ils le désirent.

L'aspect anonymat est très important car tout système ne le respectant pas, remettrait en cause le droit à la libre circulation des individus et risque d'être refusé par l'opinion publique ou même d'être considéré comme illégal. Tout aussi important est le fait que le système, pour qu'il puisse être adopté de façon générale, ne soit pas monopolisé par un seul fabricant mais qu'il puisse être mis sur le marché par plusieurs constructeurs et que les règles de la concurrence puissent jouer.

La plupart des systèmes de péage ou de taxation automatisés actuellement en service, utilisent des équipements fixes et mobiles permettant d'identifier le véhicule (numéro minéralogique électronique ou équivalent) aux postes de péage , la perception se faisant par prélèvement d'un droit de passage (fixe) du compte en banque du propriétaire du véhicule. Cette méthode fonctionne bien (aux USA, Hong-Kong, etc...) mais ne permet ni une taxation au kilomètre effectué ni de conserver l'anonymat de l'usager ni d'utiliser l'équipement à bord du véhicule à d'autres fonctions. Les possibilités de fraudes sont importantes. Le codage peut en effet être reproduit et un véhicule pourrait circuler tout en faisant percevoir les péages sur le compte d'autrui, sans que cette fraude puisse facilement être détectée.

Les systèmes existants de payements électroniques tels que: cartes de crédit magnétiques, cartes à "puces" (smart cards), etc... ont été développés pour fonctionner avec un appareil de lecture ou de programmation (équipement de perception) qui est protégé contre les fraudes et qui est sous surveillance. En aucun cas l'utilisateur de ces moyens de payements ne peut accéder aux données informatisées qui s'échangent entre la carte de crédit et l'équipement de perception car celle-ci est physiquement mise dans l'appareil et en contact avec celui-ci.

Il n'en est plus de même pour une transaction de payement où la carte de crédit se trouve à distance de l'appareil de perception. En effet, les données échangées entre les deux éléments sont transmises à distance et peuvent donc faire l'objet d'indiscrétions de toute nature et leur "authenticité" ne peut plus être garantie. Toute transmission d'information à distance rend celle-ci vulnérable car elle peut être interceptée ou reproductible et est donc sensible aux fraudes de toute nature.

Les moyens électroniques de payement existants ne peuvent valablement servir aux fonctions de péage automatique " au vol " pour les véhicules routiers.

Les efforts entrepris par le Conseil des Communautés Européennes ( CCE ) entre autres, en créant des programmes de réflexion et de recherche tels que : Projets Prometheus, Race, et tout récemment Drive, incitant les industries à trouver de nouvelles solutions pour optimiser de manière générale le trafic routier et plus spécifiquement, des systèmes de télétaxation et / ou de péage automatiques pour véhicules, sont autant d'indicateurs qu'il n'existe manifestement pas à ce jour de système valable répondant aux besoins actuels et futurs dans le domaine.

Le brevet US-A-4303904 (CHASEK) illustre une approche du problème mais n'apporte pas une solution convenable aux besoins du marché.

En particulier, il décrit un système qui prévoit que la société exploitante reçoive les moyens d'identification de l'usager. Ledit système ne prévoit pas l'encryptage des données au moyen d'une clé parmi une liste de clés définies lors de l'initialisation du module de péage.

Pour remédier aux inconvéniants et limitation de la technique antérieure, l'invention propose les caractéristiques telles que définies dans la partie caractérisante de la revendication 1.

La présente invention concerne un système permettant d'assurer valablement les fonctions de taxation et / ou de péage automatique à distance, en améliorant et en adaptant des procédés existants de payement électroniques et elle répond par son principe et sa structure aux spécifications souhaitées par des exploitants de postes de péages et par des autorités de divers Pays désireux d'implanter une procédure évolutive de taxation routière.

Cet objectif est atteint au moyen des caractéristiques exposées dans la partie caractérisante de la revendication 1.

Le procédé d'acquittement d'un péage à un poste dé péage est réalisé de manière similaire aux méthodes de péage manuelles, mais la monnaie utilisée est de type informatique, sous forme de points comptabilisés dans un "porte-monnaie" électronique que les usagers possèdent en propre et dont ils équipent leur véhicule. Les transactions de péage se font à distance, lorsque le véhicule se présente au poste de péage, par prélèvement automatique d'un certain nombre de points (équivalents au droit à payer) et ce "au vol" sans que le véhicule ne doive s'arrêter impérativement.

Ce procédé permet d'intégrer facilement le système automatique de péage aux structures manuelles (qui de toute façon devront être conservées pour les usagers qui ne désirent pas utiliser le système automatique) et sans que sa mise en oeuvre nécessite des modifications importantes des infrastructures routières ou une réadaptation des habitudes des usagers.

Les transactions de péage se font de manière anonyme pour autant qu'aucune anomalie ou fraude ne soit détectée.

Le système se compose d'une part d'équipements fixes, appelés " interrogateurs "; chaque interrogateur peut être placé soit au-dessus d'une voie de circulation (sur un portique par ex. ) soit sur le côté de la voie de circulation, à une certaine hauteur par rapport à la chaussée, de manière à viser vers les véhicules en approche sur cette voie de circulation.

L'interrogateur, installé de cette façon, couvre une zône (appelée "zône de capture") dans laquelle il est capable d'interroger et de communiquer avec les équipements récepteurs / répondeurs, appelés transpondeurs, montés à bord des véhicules.

Dans le cas de routes à plusieures voies de circulation, plusieurs interrogateurs peuvent être placés pour que chacun couvre une voie de circulation.

Les interrogateurs sont munis d'une unité de transmission (d'émission et réception) à rayonnement directif qui détermine le profil de la zône de capture. De manière générale, chaque interrogateur, surtout dans le cas de voies paralleles, crée une zône de capture qui déborde sur la zône voisine pour assurer une couverture sans failles, certains véhicules pouvant éventuellement rouler à cheval sur deux voies de circulation ou effectuer une manoeuvre de dépassement juste dans les zônes de captures.

Pour garantir une meilleure couverture d'un axe de roulage à voies multiples, sans séparation physique, chaque voie peut être couverte par un appareil interrogateur dédoublé, de manière à produire deux zônes de capture décalées horizontalement et qui se chevauchent partiellement.

Cette disposition permet d'augmenter la disponibilité de l'installation fixe si chaque interrogateur est complètement dédoublé et pas seulement les antennes ou organes d'émission et de réception.

L'ensemble des interrogateurs couvrant un axe de circulation doit être relié à une unité de traitement informatique des données.

D'autre part, le système comporte des appareils montés à bord des véhicules, appelés "transpondeurs", lesquels sont les interlocuteurs privilegiés des interrogateurs.

Chaque transpondeur est monté à bord du véhicule de manière à être bien accessible aux interrogateurs par exemple, fixé derrière le pare-brise du véhicule, en un endroit qui ne gène pas la visibilité du conducteur, à la hauteur du rétroviseur (derrière celui-ci).

Normalement, le transpondeur est un appareil qui comprend au moins deux parties, l'une appelée "transmetteur", pouvant être fixée de manière définitive au véhicule (par collage au pare-brise, par ex.) et l'autre, appelée "module de péage", destinée à être insérée dans un logement du boîtier du transmetteur, prévu à cet effet.

Le transmetteur contient essentiellement les éléments d'antenne(s) (transmission radio) ou d'émission / réception par voie optique (transmission infrarouge) et les circuits électroniques d'interfaces permettant d'assurer la communication "hertzienne" avec les interrogateurs.

L'avantage d'une unité de transmission fixée au véhicule de manière permanente est double; d'une part il permet d'inclure dans le transmetteur un code représentatif de la catégorie de véhicule auquel il est attaché, code qui est mis à disposition du module de péage décrit plus loin et d'autre part, le transmetteur peut être installé sur le véhicule de manière optimale sans risques de déréglement ou d'utilisation non conforme qui pourrait compromettre la fiabilité de la transmission avec les postes interrogateurs. De plus, ceci permet à l'usager de retirer la partie importante (le module de péage) sans s'encombrer de la partie transmission qui est plus volumineuse.

Le module de péage (porte-monnaie électronique) peut se présenter physiquement sous des formes variées, être facile à manipuler et l'usager peut le mettre en poche. Il possède un connecteur et guide d'embrochage compatible avec le réceptacle défini à cet effet dans le boîtier du transmetteur.

Il contient d'une part, l'électronique de mémorisation des données, les circuits d'encryptage et de décryptage ainsi que de contrôle d'accès aux données stockées dans la mémoire du module et d'autre, part le circuit d'alimentation avec la batterie ou pile électrochimique; le tout est incorporé dans un habillage résistant.

L'ensemble des circuits électroniques du module de péage est noyé (par enrobage ou par injection) dans la masse du boîtier du module et, selon les modèles, la pile ou batterie peut être soit interchangeable soit également noyée dans le module (modèle à jeter ou à retourner après épuisement de la pile ).

La durée de vie d'un module de péage (modèle à jeter) peut être au moins de deux à cinq ans, la technologie des circuits électroniques intégrés actuels permet de réaliser des circuits à fonctions complexes qui ne consomment que très peu d'énergie.

Le module de péage est auto-alimenté par sa pile incorporée, surtout pour la sauvegarde des données emmagasinées en mémoire et sert aussi éventuellement à alimenter la partie transmetteur lorsque le module de péage lui est connecté, auquel cas le transmetteur n'a pas sa propre source d'alimentation (par pile ou raccordement à la batterie du véhicule).

A priori, le transpondeur ne doit pas être alimenté par le circuit électrique du véhicule et est d'un fonctionnement parfaitement autonome, ce qui permet une installation extrêmement aisée (par collage sur le pare-brise, par ex.) et l'usager peut, selon son désir, activer le transpondeur de son véhicule simplement en insérant le module de péage dans le boîtier du transmetteur fixé au véhicule.

Le module de péage comporte en lui les circuits électroniques de décision logiques ( par microprocesseur et logiciels nécessaires ) pour remplir, en interne les fonctions qui lui sont demandées à distance, sous forme d'instructions à exécuter et gère le protocole de dialogue avec l'appareil interrogateur. L'ensemble des opérations dites "intelligentes" ou à caractère confidentiel sont exécutées par lui, la partie transmetteur n'étant en quelque sorte qu'une interface de communication, qui pourrait être considérée comme "transparente", entre le module de péage et l'interrogateur.

Le transmetteur peut d'ailleurs servir d'interface de réception pour d'autres appareils installés à bord des véhicules, pour autant que les signaux soient compatibles avec les circuits de réception (fréquence, bande passante, etc...).

Un même module de péage peut remplir de multiples fonctions telles que (liste non limitative): abonnement de parking, droit d'entrée en des lieux protégés, péages autoroutiers, taxation pour l'usage de certaines infrastructures, etc...

Il est possible d'avoir une gamme de modules de péages laquelle irait du module avec un nombre limité de fonctions au modèle très complet avec un ensemble de fonctions auxiliaires, le choix du modèle pouvant être laissé à l'usager suivant ses besoins.

Un module de péage peut aussi être prévu sous forme mono-bloc, pour pouvoir servir comme système simple et compact, par exemple, pour des usagers étrangers qui devraient équiper leur véhicule s'ils veulent utiliser le réseau routier d'un pays qui appliquerait la "taxation à l'usage". Le module de péage dans ce cas pourrait comprendre tous les circuits y compris les circuits de communication dans un même boitier compact et scellé, le module devant être placé derrière le pare-brise du véhicule (collé par exemple) et pouvant être décollé sans dommages pour qu'il soit rendu après usage. Dans ce cas, le transpondeur peut être équipé d'un connecteur similaire à celui d'un module de péage pour permettre de l'initialiser et de le valider.

Chacun des éléments composant le système devra être protégé efficacement contre des tentatives de fraudes, la méthode de protection est décrite plus loin.

La description du principe de fonctionnement qui suit est donnée pour information seulement et pour permettre une claire compréhension du système. Le procédé de communication entre équipement fixe et mobile est basé sur une methode simple (question/ réponse), une des particularités du concept de la présente invention consiste en ce que la "question" ne soit comprise que par des interlocuteurs déterminés et que la "réponse" ne soit comprise que par celui qui a posé la "question", de sorte que les parades soient prévues pour rendre toute fraude extrêmement difficile, voire impossible sans être immédiatement détectée.

La procédure de communication est basée sur le principe suivant: le poste fixe interrogateur émet continuellement un message signalant d'une part sa présence (celui-ci consiste en un télégramme contenant soit la demande de perception d'un droit de péage soit une instruction à exécuter). Un transpondeur situé dans la zône de portée (zône de capture) capte le télégramme et analyse son contenu. Si la demande est acceptée et correctement interprétée, le transpondeur (mobile) renvoie un télégramme d'acquit avec indication de bonne fin ou s'il n'a pu exécuter correctement la demande (mais l'a reconnue valide), le transpondeur renvoie un télégramme d'acquit avec indication de la cause du refus.

Le transpondeur ne répond que si le télégramme de demande capté est cohérent et qu'il signifie quelque chose pour le module de péage (après avoir passé toute une série de tests de conformité très sévères). Le passage n'est admis comme valable que si le module de péage a acquitté l'instruction de demande. Dans tous les autres cas, le poste fixe constate une irrégularité et peut prendre des actions de rétorsion telles que avertissement du conducteur par signalisation ou prise d'une photo du véhicule, enregistrement video, etc...

De cette façon, l'exploitant peut soit recourir à une perception manuelle soit identifier l'usager contrevenant pour recours ultérieur.

Les télégrammes échangés à distance entre poste fixe interrogateur et transpondeur mobile, consistent en des données digitalisées, transmises en paquets et utilisant un support de transmission du type à ondes électromagnétiques soit du type infrarouge ou autre. Chaque télégramme ainsi transmis est sécurisé, pour se prémunir des fraudes de toute nature, par technique d'encryptage (selon le standard DES, par exemple) et fait appel à une clef qui sert au brouillage des données à l'émission et qui est indispensable pour reconstituer le message à la réception.

La clef est elle-même un code digitalisé dont le nombre de bits (longueur de la clef) détermine le nombre de combinaisons possibles. Par exemple, une clef de 64 bits permet 10 exposant 19 combinaisons, ce qui rend le brouillage quasiment inviolable mais en plus l'on peut changer la clef régulièrement, ce qui évite que le système ne fonctionne en permanence avec le même code d'encryptage sans qu'il ne soit possible de le changer. Une partie des données du télégramme de demande est transmise "en clair" et est destinée à informer tous les transpondeurs qui se présentent, de l'identité (sous forme d'un code représentatif) de la société exploitante qui utilise le poste interrogateur; dans le transpondeur, le module de péage peut vérifier si celui-ci possède une "souscription ou compte ouvert" pour cet exploitant, ce qui lui permet de ne se préoccuper que des messages d'interrogateurs qui le concernent.

Les données qui suivent dans le télégramme sont donc encryptées au moyen d'une clef sélectionnée parmi une liste de clefs différentes et disponibles en mémoire de l'appareil interrogateur, liste de clefs qui est d'application à ce moment-là. La même liste est mémorisée dans chaque module de péage et y a été programmée lors de l'initialisation ou validation du module pour cet exploitant.

Dans le télégramme est inclus un code "en clair" qui indique le numéro d'ordre de la clef dans la liste à utiliser pour décrypter le reste des données, la clef elle-même restant secrète.

La structure du télégramme de réponse est similaire mais le format et le type de modulation sont différents pour permettre de les différencier facilement.

D'autre part, certaines données dans la partie confidentielle d'un télégramme changent à chaque cycle d'interrogation, ce qui a pour effet de rendre la composition digitale des télégrammes chaque fois différente, même si en fin de compte il représente u ne fonction identique; ceci permet d'éviter la fraude en reproduisant le signal d'un télégramme enregistré au préalable.

Pour ce faire, les télégrammes transmis par un interrogateur contiennent, dans la partie sécurisée, des informations de temps (date et heure) mais aussi un nombre produit par un générateur de nombres aléatoires ou pseudo-aléatoires; ce générateur fournissant un nombre nouveau pour chaque cycle d'interrogation.

Il en est de même pour les données contenues dans les messages de réponses.

L'interrogateur transmet dans la partie utile, confidentielle et encryptée de son télégramme de demande, le code représentatif de l'instruction (type de transaction) à effectuer et une table de données relatives à cette instruction. Ces données sont par exemple: tarifs applicables par catégorie de véhicule, lieu du poste fixe, etc... ou une combinaison de ces données.

L'interprétation et le traitement des données, en fonction de l'instruction reçue, incombe entièrement au processeur du module de péage qui seul décide, en fonction des paramètres ou données qu'il a en mémoire, de la recevabilité ou de la suite à donner à la demande de transaction.

Le module de péage constitue l'élément porteur de "valeurs", équivalent à un compte (ou des comptes) crédité(s) d'un nombre de points représentatif de la somme versée par l'usager anticipativement (payement " bons à valoir" ou par provision), lors de la validation ou initialisation du module de péage.

Le nombre de "points" en compte dans le module représente le solde restant à valoir pour des transactions de péage à venir.

Si le montant d'une taxe ou d'un péage (sous forme d'un nombre de points à déduire) lors d'une transaction automatique dépasse le nombre de points en solde dans le module de péage, la réponse du transpondeur vers le poste interrogateur comportera la mention "solde insuffisant". Le poste fixe peut dès lors décider des dispositions à prendre (photo du véhicule, feu rouge, signaler au conducteur le problème, etc...).

Le module de péage peut aussi exister en version "compte à crédit", avec ou sans limite de validité dans le temps et qui devra être réglé à postériori, lors de la revalidation du module.

Le module de péage permettant le débit automatique d'un compte banque peut également être prévu et dans ce cas, le télégramme de réponse du transpondeur renvoie les données caractéristiques du compte, la catégorie du véhicule, le type d'usage, etc...

L'utilisation d'un tel type de module de péage nécéssitera, dans la plupart des cas, l'introduction d'un code personnel par la voie d'un clavier à bord du véhicule; ce qui permet d'activer une session de fonctionnement du module de péage pour la durée d'un voyage et permet d'autre part de rendre celui-ci inopérant en cas de vol ou de perte.

L'ensemble de ces différents types de modules de péage peuvent parfaitement co-exister dans le système.

Toute opération résultant d'un dialogue entre poste fixe interrogateur et transpondeur mobile est appelée "transaction".

Différentes transactions sont possibles selon les besoins et le contexte et par exemple : transaction de péage d'un droit unique, transaction de péage au kilomètre, transaction de localisation, transaction d'identification, transaction d'accés, transaction de test, etc...

- La transaction de péage d'un droit unique consiste en ce que le poste fixe donne des informations de tarifs à appliquer (télégramme de demande de l'interrogateur ), le module de péage exécute l'instruction de péage en soustrayant un certain nombre de points du compte de "valeurs", conformément au tarif indiqué et qui le concerne.

Le nombre de points restants constitue le solde de compte en mémoire du module de péage.

- La transaction de localisation consiste à informer le transpondeur, par le télégramme de demande du poste fixe interrogateur, du lieu de passage, considéré comme une entrée dans un secteur.

L'information contient un code univoque du lieu du poste fixe et est mémorisée dans le module de péage, donnée qui servira au moment de l'application de la perception (transaction de péage au kilomètre) lors de la sortie du secteur.

Le code du lieu peut être simplement la borne kilomètrique du lieu, la perception se faisant alors sur base de : Km (sortie) - Km (entrée) = N,(N étant le nombre de kilomètres parcourus).

L'interrogateur (au poste de sortie) donne la borne kilomètrique du lieu de sortie et aussi le tarif par Km et par catégorie (sous forme d'un certain nombre de points à déduire par Km parcourus); le processeur du module de péage effectue le calcul et peut dès lors soustraire le nombre de points nécessaires du compte de "valeurs" en mémoire.

La methode est appelée perception en deux temps, comme pratiquée sur les autoroutes à péage et permet de se combiner avec les moyens de perception manuels tout en conservant les infrastructures existantes.

- La transaction d'identification permet à un interrogateur de connaître l'identité du véhicule qui se présente, à condition bien sûr que l'usager ait choisi cette option lors de l'acquisition de son transpondeur.

Ceci permet de détecter les véhicules déclarés volés par exemple.

- La transaction de vérification permet à un interrogateur de connaître la catégorie à laquelle appartient le véhicule et la classification de l'usager (handicapé, véhicule de police, transport en commun, etc...). Cette information peut être interessante pour des opérations de comptages sélectifs des véhicules empruntant un axe routier, à des fins de mesures statistiques par exemple; cette transaction permet aussi de vérifier la validité et le fonctionnement des transpondeurs comme contrôle préalable des véhicules en approche et d'éventuellement les aiguiller vers divers postes de perception.

- La transaction d'accès permet d'autoriser ou non, en fonction de la présence d'un code d'accés inscrit dans les mémoires du module de péage, à un véhicule d'accéder à un lieu protégé tel que parking par exemple.
- La transaction de test permet à l'interrogateur de vérifier si le véhicule qui se présente dispose d'un transpondeur et si celui-ci est valable (non périmé, volé, etc...).

Un interrogateur pour un poste de péage donné ne demande que l'exécution d'un seul type de transaction au passage des véhicules; le type de transaction est défini par l'exploitation du poste de péage ou de taxation.

Le système permet l'extension à d'autres fonctions types de transactions possibles dans le futur sans pour autant compromettre la compatibilité avec les versions initiales.

Pendant la présence d'un transpondeur dans une zône de capture d'un poste fixe interrogateur, ce transpondeur répondra continuellement par un télégramme d'acquit à chaque télégramme de demande reçu de l'interrogateur, pour autant qu'il valide ces messages de demande, de manière à confirmer sa présence dans la zône; la répétition des messages "au vol" est indispensable et permet de garantir, avec une bonne probabilité, que les transactions se fassent avec un taux de rejet minimum.

Pour éviter une double ou multiple taxation d'un même véhicule, le module de péage mémorise l'identité du dernier poste interrogateur auquel il a répondu, refusant d'exécuter à nouveau la même transaction en répondant par un message d'acquit avec mention "déjà exécuté"; il faut que le véhicule sorte de la zône de capture, c'est à dire que le transpondeur repasse en mode de veille pendant un certain délai ( quelques minutes); pour réactiver la "taxabilité" de ce même poste fixe ( il est très improbable qu'un même véhicule repasse au même poste de péage endéans ces quelques minutes ); par contre, un autre poste de péage serait immédiatement pris en compte.

Le module de péage contient une fonction complémentaire qui consiste en une mémoire ou une zône de mémoire, réservée à cet effet et dans laquelle l'historique des diverses transactions de péage effectuées est répertorié. Le nombre de transactions ainsi mémorisées dépend essentiellement de la capacité de cette mémoire qui possède une structure de mémoire circulaire (par ex. 250 ou 500 dernières transactions enregistrées); toutes les données sont sauvegardées par la pile d'alimentation incorporée au module.

L'usager a dès lors la possibilité, lors d'une opération de validation dans un bureau agréé, de demander l'impression de la liste des transactions enregistrées dans la mémoire de son module de péage.

Il peut ainsi disposer d'un document pouvant servir à des fin de contrôle ou d'archivage.

Les données emmagasinées dans un module de péage sont protégées par les divers codes d'encryptage, mais aussi par un circuit électronique ou par logiciel interne qui permet de détecter une activité d'interrogations anormalement élevée aux bornes de contacts du module (tentatives de percer les codes par simulation systématique de toutes les combinaisons) et qui a pour effet de verrouiller tout dialogue et de rendre le module inopérationnel, éventuellement nécessitant une réinitialisation (qui peut détecter la cause du verrouillage) de celui-ci.

Toute agression physique du module a pour effet, de par sa construction mécanique, d'effacer immédiatement les mémoires du module et très probablement la destruction des circuits qu'il contient.

Pour être opérationnel, le module de péage doit bien sur être initialisé et programmé, ce qui se fait par souscription du détenteur (l'usager) au système de péage automatique proposé par l'Exploitant, c'est à dire en s'adressant dans des "points de ventes" ou bureaux agréés (les banques par ex.) qui sont équipés d'un appareil spécifique destiné à la programmation des modules de péages, appelé "programmateur".

L'usager détenteur (propriétaire) d'un module de péage dispose d'un code secret du style code personnel utilisé pour les cartes de crédit.

Toute action de programmation du module de péage nécessite l'introduction par clavier de ce code et éventuellement du ou des numéro(s) des transmetteurs concernés sur le(s)quel(s) le module pourra être installé.

La programmation du module de péage consiste à lui injecter dans les mémoires, par le connecteur, les divers paramètres à l'aide d'un jeu de télégrammes spécifiquement destinés à cet effet et comprenant : l'identité de la Société d'exploitation concernée, les codes d'accès, les listes de clefs d'encryptages en vigueur, le nombre de points mis en crédit et payés, etc...

Toutes les données confidentielles correspondantes (et appartenant exclusivement à l'exploitant et l'organisme bancaire) telles que code d'identité, liste de clefs d'encryptages, codes d'accès, etc... sont sécurisées dans l'appareil programmateur, qui lui même est protégé.

Le module de péage peut être produit en diverses capacités et une gamme de versions différentes pourrait être proposée aux usagers.

Un même module peut contenir soit une mémoire soit des partitions de mémoires, chaque partition étant fonctionnellement autonome.

La gestion de ces partitions est assurée par le processeur de traitement du module de péage qui peut dès lors recevoir les paramètres pour une série de souscriptions différentes; par exemple: partition a) = Société d'autoroute "ABC", partition b) = péage Parking "FGH", c) = péage Tunnel "XYZ", etc...

L'interêt de l'usager est que le transpondeur dont il équipe son véhicule soit utilisable à plusieures fins.

La partie transmetteur dispose quant à elle d'un code préprogrammé et d'un code auxiliaire déterminant la catégorie du véhicule: voiture de tourisme, camionnette, poids lourd, etc... et d'un code de la classification de l'usager: handicapé, police, militaire, etc...

Le module de péage tient compte de ces codes pour adapter la taxation ou le péage en fonction de la catégorie du véhicule et classe, le tarif applicable pour chaque catégorie ainsi que pour chaque classe étant donné dans le télégramme de l'interrogateur.

Mécaniquement, le transmetteur lui-même est protégé contre toute agression physique, une telle agression entrainerait la destruction des circuits qu'il contient ou la mise hors service de l'équipement quand l'on tente de le démonter du véhicule ou de le décortiquer.

Pour économiser l'énergie de la batterie d'alimentation du transpondeur, ou de celle contenue dans le module de péage, celui-ci possède un circuit de contrôle permettant, entre autres, de maintenir en veille la plupart des circuits électroniques et donc de limiter la consommation à la conservation des mémoires de données dans le module de péage; le circuit de réception du transpondeur (partie transmetteur) est activé cycliquement pendant un court instant puis remis au repos, procédure qui permet au transpondeur de détecter s'il est ou non dans une zône de capture d'un interrogateur, en économisant au mieux l'énergie.

Le circuit de réception, s'il est dans une zône de capture, peut donner un signal au circuit de contrôle qui activera les circuits internes du module de péage, pour permettre l'analyse du message d'interrogation; en fonction du résultat de ce décodage, les circuits de réponse seront activés ou non.

Les appareils interrogateurs installés sur un poste de péage ou de taxation pourront être reliés à une unité centrale de traitement informatique.

Toutes les transactions effectuées pourront donc être traitées à des fin de gestion (comptabilité, statistiques, etc...), cette unité centrale pouvant également décider la prise de photo, ou l'enregistrement video, etc...

La détection de présence d'un véhicule dans la zône d'un interrogateur peut être réalisée par des boucles inductives installées dans le revêtement de la route, par exemple.

Il en est de même pour les détecteurs de sortie de zone (après la zone de capture), ces détecteurs permettent de déterminer si un véhicule est passé sans avoir acquitté son droit de passage.

Les figures jointes permettent d'illustrer le fonctionnement du système de péage.

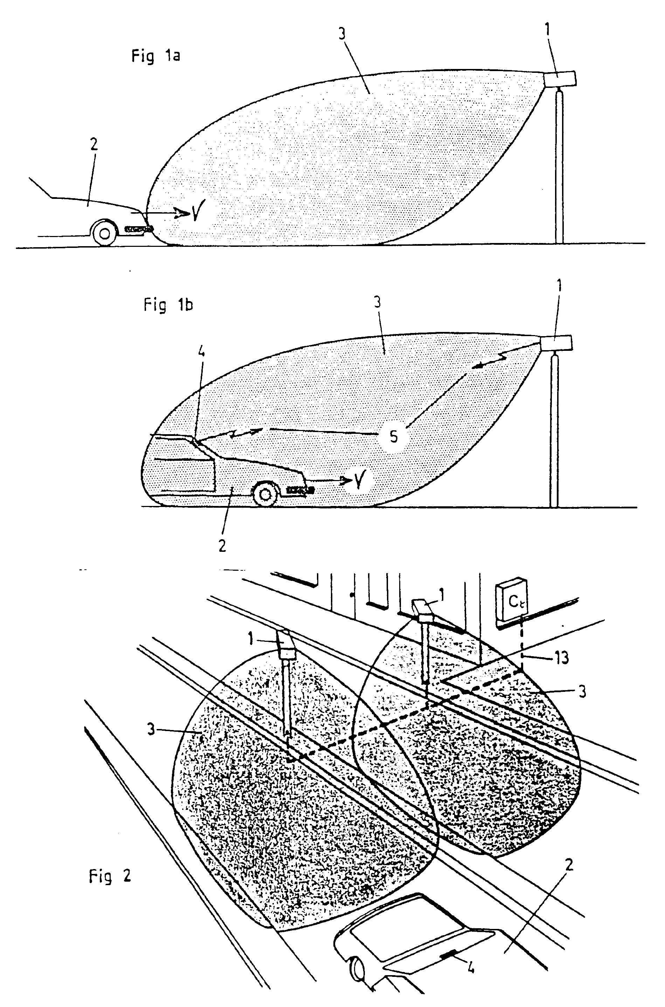

Les figures 1. 2, 3 et 4 décrivent des exemples d'installation des équipements.

La figure 1 (A et B) montre en profil, l'approche d'un véhicule (2) dans la zone de capture (3) de l'interrogateur fixe (1), la zone hachurée (3) donne une représentation imagée de la forme de la zone de capture produite par l'interrogateur, zone qui représente un volume dans l'espace dans lequel la communication entre équipement fixe et mobile peut s'établir.

La figure (1A) montre un véhicule (2) qui s'approche de la zone de capture (3) à la vitesse (V).

La figure (1B) montre le véhicule (2) un instant plus tard dans la zone de capture (3).

La communication (5) peut s'établir alors entre le poste fixe interrogateur (1) et le transpondeur (4) situé à bord du véhicule qui continue à se déplacer à la vitesse (V) pour sortir de la zone de capture, en passant sous où à côté de l'interrogateur fixe un instant plus tard.

Le temps de présence du véhicule dans la zone de capture est lié à la vitesse du véhicule et à la dimension (portée de communication) de cette zone de capture, celle-ci ne pouvant être trop petite pour permettre l'échange des messages, mais devant être limitée en pratique pour bien cerner la zone voulue, sans risques de déborder outre mesures.

La figure 2 illustre en perspective l'approche du véhicule (2) muni de son transpondeur (4) situé derrière le pare-brise de manière à être bien accessible lors de la présence de celui-ci dans la zone de capture (3) de l'interrogateur (1), chaque voie de circulation étant "couverte" par un interrogateur séparé mais ceux-ci étant reliés entre eux et avec un centre de traitement des données (C) par une liaison cablée (13); l'ensemble constitue un poste de péage.

La figure 3 ( A et b ) montre un exemple de disposition des appareils transpondeurs à bord des véhicules.

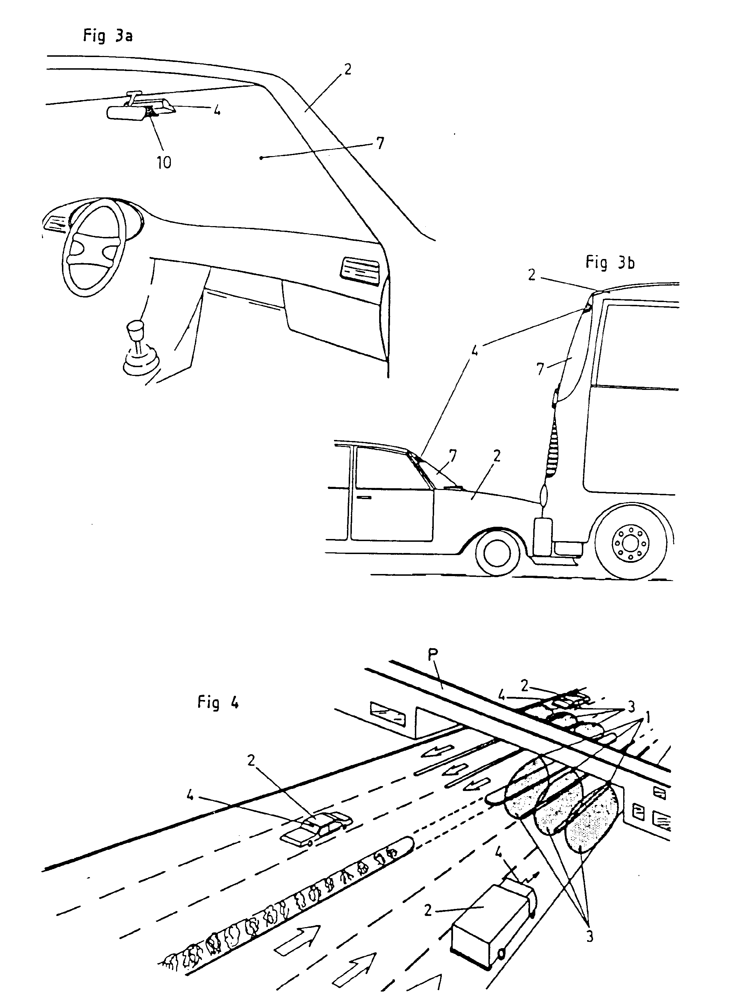

Le transpondeur (4) peut être judicieusement placé par collage derrière le pare-brise (7), sur la face interne de celui-ci, que ce soit une voiture particulière, un camion ou un autobus (fig. 3 B ).

L'installation à l'intérieur du véhicule protège le transpondeur (4) des intempéries et rend aisé l'embrochage du module de péage (10) dans le logement prévu à cet effet dans le boîtier du transpondeur.

La figure 4 illustre en perspective une autre disposition des appareils interrogateurs fixes (1).

Dans ce cas, ils sont disposés au-dessus de chaque voie de circulation, sur un portique par exemple et ils sont inclinés vers le bas, en direction des véhicules en approche (2) sur la voie de circulation concernée, de façon à obtenir des zones de captures (3) qui couvrent convenablement chaque voie et pour que chaque interrogateur (1) puisse bien accéder aux transpondeurs (4), accessibles par l'avant des véhicules.

Le portique peut être équipé, comme dans la figure, pour les deux sens de circulation; les interrogateurs sont disposés de manière équivalente mais de l'autre côté du portique (P).

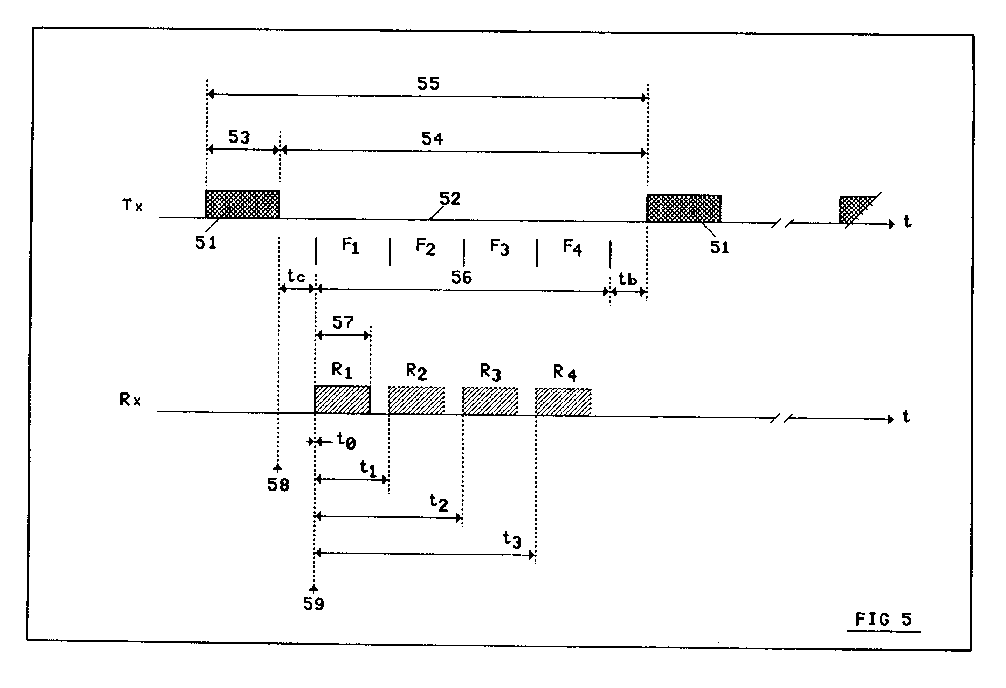

La figure 5 permet d'illustrer l'échange des télégrammes entre interrogateur fixe et transpondeur mobile.

Les graphiques (TX et RX) représentent la répartition des évènements sur l'axe du temps (t).

Le tracé (TX) montre en (51) l'envoi par l'interrogateur du télégramme de demande suivi d'une période d'écoute (52); la durée d'envoi du télégramme correspond à un délai (53) constant car les télégrammes sont de longueur fixe, la phase d'écoute nécessitant un délai plus long (54) qui sera défini plus loin.

Le cycle ainsi constitué possède une période égale au temps (55) et se répète continuellement.

En effet un interrogateur fixe ne sait à priori pas quand des véhicules passeront et sert aussi de balise avertissant le ou les transpondeur(s) qu'ils approchent d'un interrogateur.

Le tracé (RX) montre la répartition dans le temps (t) et à la même échelle que l'axe (TX), du télégramme de réponse que peut émettre le transpondeur qui se trouve dans la zone de capture de l'interrogateur.

La synchronisation se fait, au niveau du transpondeur sur base de la détection de la fin du télégramme de demande (51) tel que capté par le transpondeur (instant (58) ); le traitement et 1 analyse du contenu de ce télégramme reçu prend un temps (tc) après quoi, le transpondeur dispose pour 1 exemple de 4 fenêtres de temps ( F1 à F4 ) parmi lesquelles il doit en choisir une, s'il veut envoyer un télégramme de réponse.

Chaque fenêtre de temps correspond à un délais égal à (t1) qui est légèrement supérieur au temps imparti (57) pour l'envoi d'un télégramme de réponse et est donc décalé de façon égale avec des retards par rapport au point (59) de (t0), (t1), (t2), (t3) et ces délais valent respectivement 0, t1, 2 fois t1, 3 fois t1.

Le choix de la fenêtre pour la réponse se résume au choix d'un délais parmi ces quatre délais déterminés et se fait sur base d'un générateur de nombres aléatoires ( dans le transpondeur ) qui sélectionne un de ces délais à appliquer avant l'envoi du télégramme de réponse.

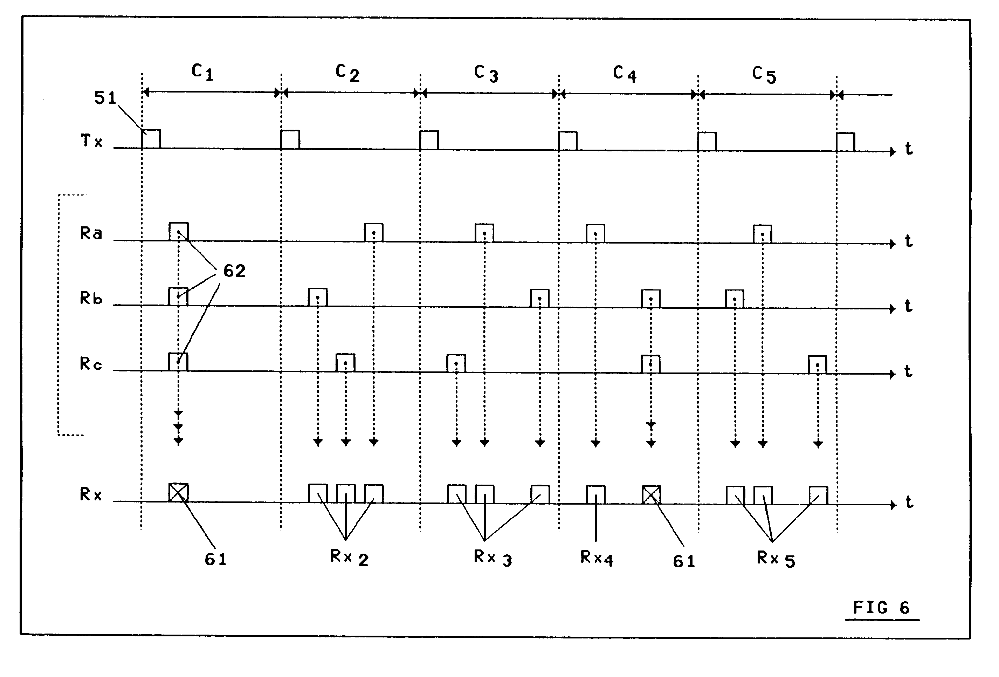

Cette même procédure est d'application pour tous les transpondeurs en service et assure que les télégrammes de réponses ne risquent pas de brouiller les télégrammes de demandes émis par les interrogateurs, mais une autre raison pour l'usage de cette procédure est expliquée dans la figure 6.

Le temps (56) représente le temps global pour 4 fenêtres de réponses, un délai supplémentaire (tb) est prévu dans le calcul du délai d'écoute de l'interrogateur comme réserve pour compenser les dérives entre les divers transpondeurs et pour être certain que le télégramme émis par l'interrogateur ne le soit trop tôt, le temps d'écoute (54) du poste interrogateur est donc défini comme étant la somme des délais suivants: (tc + (4 fois t1) + tb) et est valable pour tous les postes interrogateurs.

A chaque cycle d'interrogation, un transpondeur n'émet au maximum qu'un seul télégramme de réponse, le restant du temps (les autres fenêtres de temps) est donc disponible pour la réponse que d'autres transpondeurs pourraient faire dans le même cycle d'interrogation.

La figure 6 illustre le dialogue entre un interrogateur et différents transpondeurs par un exemple de multiplexage dans le temps de la communication avec chaque transpondeur présent dans la zône de capture.

Les graphiques représentent dans le temps (t) les diverses chronologies des évènements.

Le tracé (TX) montre les cycles d'interrogation (C1, C2, C3, C4, etc...) tels qu'émis par un poste interrogateur et tels que captés par les transpondeurs présents dans la zône de capture, chaque cycle débute par le télégramme de demande (51).

La réponse de chaque transpondeur présent (trois pour l'exemple) est représentée suivant les axes (ra, rb, rc) tandis que l'axe (RX) montre la chronologie des messages tels que captés par le récepteur du poste interrogateur, qui est en quelque sorte l'addition des divers messages de réponses des transpondeurs présents.

Dans le cycle (C1), par hazard, les trois transpondeurs (Ra,Rb,Rc) répondent en même temps (62), les messages de réponses se télescopent, ce qui se traduit par une réception (61) brouillée et incompréhensible au niveau de l'interrogateur, si aucune mesure n'est prise cette situation a beaucoup de chance de se répéter pour les cycles suivants et que finalement peu ou aucune transaction ne puisse aboutir pendant le passage des véhicules.

Le décalage dans le temps et dans des espaces de temps bien définis mais sur base d'une composante aléatoire permet de garantir, selon les règles des probabilités, que jamais les messages de réponses de plusieurs transpondeurs ne se brouilleront mutuellement de façon permanente.

Il est raisonnable de considérer qu'au maximum 3 à 4 véhicules puissent être présents à la fois dans l'espace réduit qu'est une zône de capture d'environs 15 à 20 mètres.

L'effet de la composante aléatoire est représenté sur les mêmes tracés aux cycles suivants.

Dans le cycle (C1) les trois réponses ont lieu par hazard dans la première fenêtre de temps; aux cycles suivants (C2), (C3), les télégrammes de réponses se distribuent aléatoirement dans différentes fenêtres de temps et le résultat, au niveau de la réception par l'interrogateur, se traduit par la possibilité de capter valablement les trois télégrammes de réponses consécutivement (RX2, RX3 ), dans le temps d'écoute de chaque cycle.

De même, pour le cycle (C4) où deux télégrammes se brouillent en (61), le troisième (ra) est décalé et correctement capté (RX4); au cycle suivant (C5) les trois messages sont à nouveau répartis et pourront être captés par l'interrogateur.

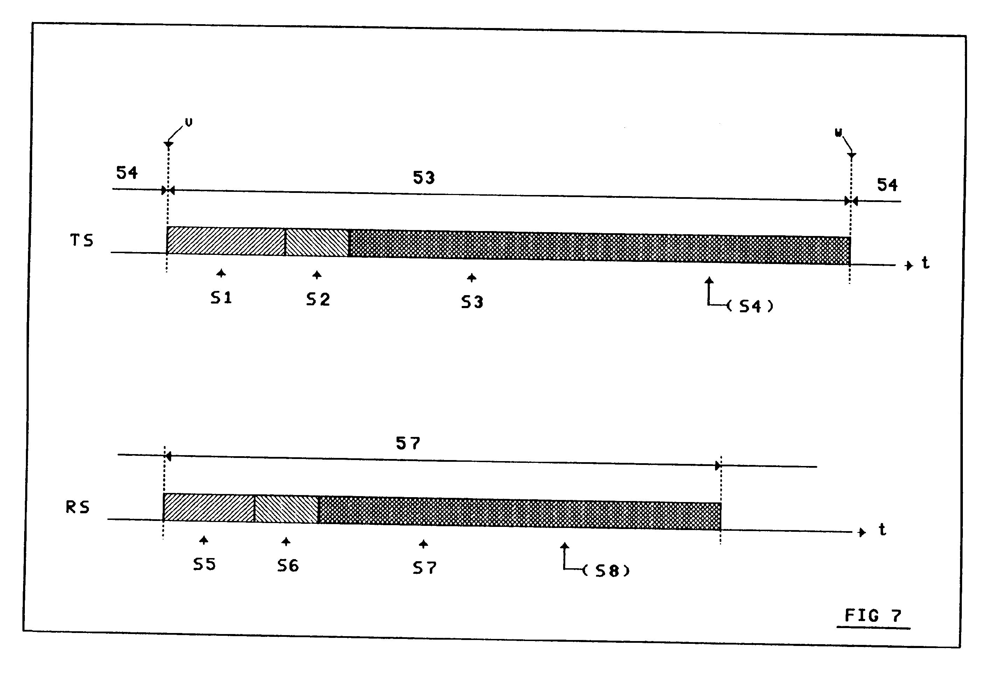

La figure 7 explicite la structure interne des télégrammes échangés entre poste fixe et mobile.

Deux types de télégrammes sont prévus; le premier est le télégramme émis (TS) par le poste interrogateur vers le transpondeur mobile et le second concerne le télégramme de réponse (RS) du transpondeur vers le fixe, chaque type de télégramme étant de structure bien définie et de longueur constante (nombre de bits fixe).

Par convention, les bits transmis consécutivement sont représentés sur les graphiques de gauche à droite, le premier bit transmis étant le plus à gauche, le dernier le plus à droite sur les axes du temps (t).

Le tracé (TS) montre le début (au point (v)) de la transmission; un train de bits formant le télégramme est émis pendant le délais (53) pour se terminer en (w) et est suivi d'une période (54) de silence (non émission ou non modulation de la part de l'interrogateur ).

Le nombre de bits ainsi transmis est constant (160 pour l'exemple ).

Le télégramme composé de ces bits est subdivisé en 4 groupes distincts comprenant chacun un nombre défini de bits d'informations; la partie (S1) comprend 24 bits et constitue l'entête du télégramme, la partie (S2) de 8 bits contient le numéro de la clef de décryptage à appliquer pour pouvoir analyser la suite du télégramme. Cette suite ayant été encrypté par l'interrogateur au moment de son émission, le décryptage est indispensable pour permettre l'interprétation du contenu de cette partie (S3).

La partie (S3) contient donc l'ensemble des bits restants du télégramme soit 128 bits parmis lesquels 16 bits forment la partie (S4), noyée quelque part dans (S3), qui est destinée à la vérification de l'intégrité du contenu du télégramme reçu (code de contrôle d'erreurs de transmission ).

La partie utile de (S3) comporte dès lors 112 bits pour les paramètres de transaction.

Ces paramètres comportent l'instruction du type de transaction à effectuer et par exemple, les tarifs de péages à percevoir pour chaque catégorie de véhicule, etc...

Le tracé (RS) montre la structure d'un télégramme de réponse émanant d'un transpondeur et se compose d'un entête (S5), qui contient un code de référence du module de péage, le numéro de clef d'encryptage (S6) qui est nécessaire pour l'interprétation de la suite du télégramme; la partie encryptée (S7) incluant le code de contrôle (S8), le tout comportant 144 bits (pour l'exemple) et nécessitant un délai de transmission (57) pour être envoyé.

Chaque télégramme possède une partie émise "en clair" pouvant être interceptée mais ne dévoilant en rien le moyen pour décrypter le reste.

La partie "en clair" permet à tout les transpondeurs (aussi ceux qui ne seraient pas abonnés vis à vis de cet exploitant) d'analyser l'identité de la société d'exploitation du poste de péage rencontré et d'abandonner de suite toute interprétation du reste du télégramme si le code d'entête n'est pas reconnu, le transpondeur ne pouvant de toute façon pas répondre quand le poste de péage lui est inconnu.

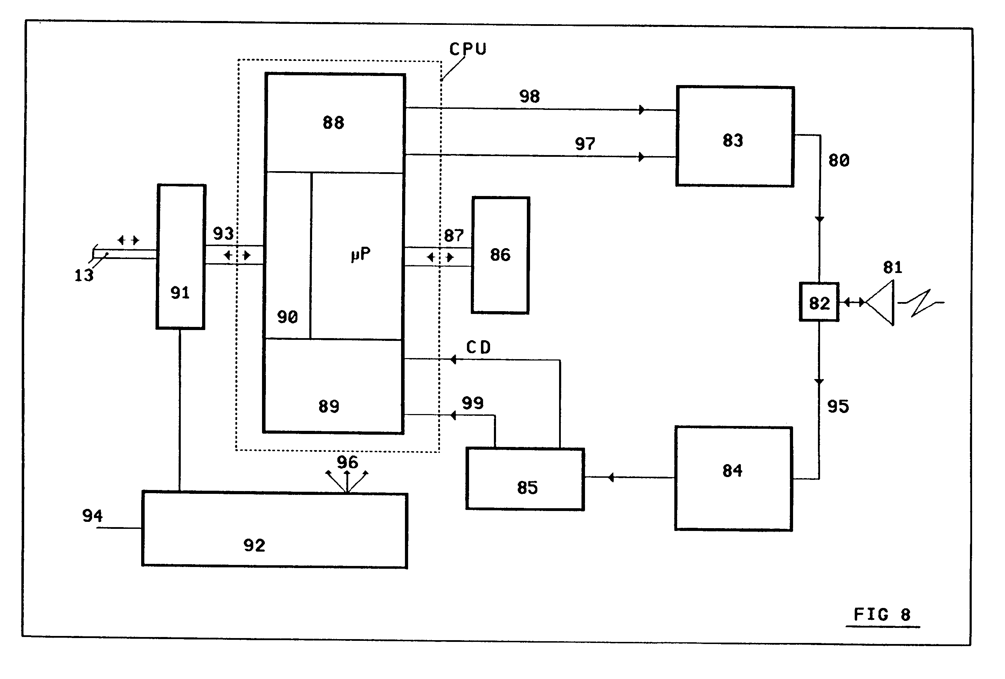

La figure 8 reprend le schéma-bloc des divers éléments fonctionnels constituant un appareil interrogateur fixe.

L'exemple considère une transmission entre fixe et mobile par ondes radio du type hyperfréquences, avec antenne directive de type cornet qui détermine, par son gain et sa géometrie, la zone de capture pour les véhicules.

En (81) l'antenne d'émission/réception est reliée au coupleur directionnel (82) ou circulateur permettant d'utiliser la même antenne en émission et en réception. Le coeur de l'interrogateur est un microprocesseur de traitement (cpu) qui possède les circuits d'interfaces de contrôle (uP), de sérialisation des données (bits) en émission (88), le registre à décalage pour la réception (89) et les circuits de communication (90) avec les circuits de mise en forme des signaux de ligne (91) compatibles avec la norme EIA / RS 422 par exemple.

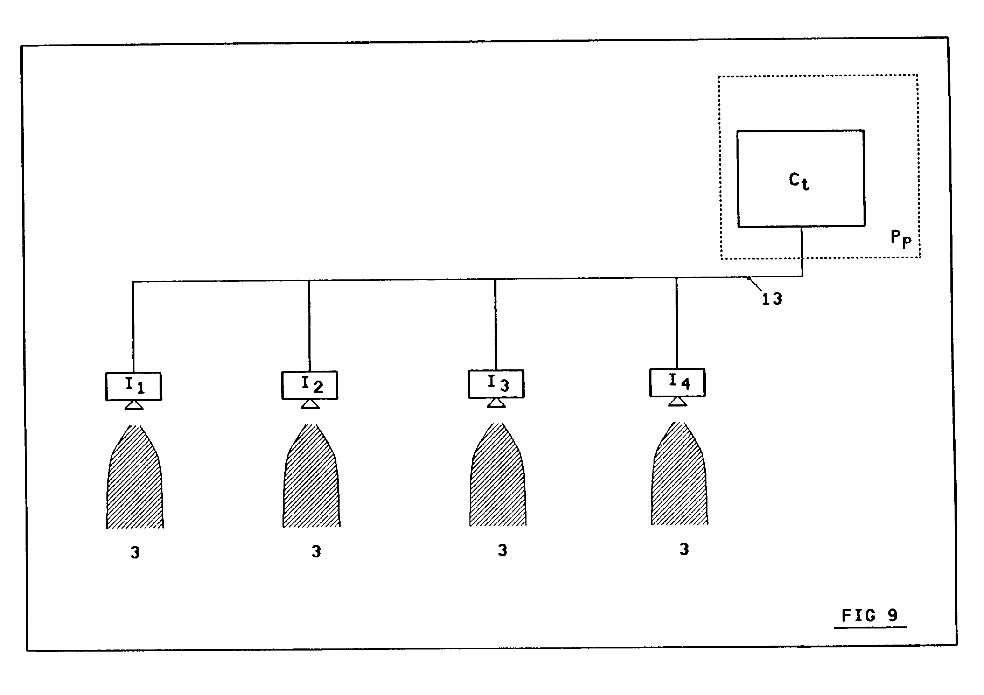

La liaison (13) permet de raccorder l'interrogateur avec l'unité centrale de traitement (voir fig. 9). Le circuit (86) assure les fonctions d'encryptage et de décryptage des messages et garde en mémoire propre les données confidentielles, comme les clefs d'encryptage. L'alimentation de l'interrogateur est fournie soit par le secteur soit par une alimentation spécifique via la ligne (94); les diverses tensions internes ( 96 ) sont générées par le bloc alimentation (92).

Le microprocesseur ($\mu$P) possède les mémoires nécessaires pour la conservation des programmes indispensables au fonctionnement et à l'exécution des différentes fonctions qui sont nécessaires pour la gestion des transactions de péage ou autres; les paramètres confidentiels comme liste de clefs d'encryptage sont contenus dans les mémoires du circuit (86), sous contrôle du processeur via les lignes (87) et protégés contre des tentatives de manipulations frauduleuses.

Lors de l'émission d'un télégramme, le microprocesseur sérialise les bits dans l'ordre requis et ceux-ci se présentent sur la ligne (98) et sont injectés dans le modulateur du générateur de porteuse ou oscillateur (83), le signal (80) étant injecté dans l'antenne (81) via le circulateur (82).

En réception, l'oscillateur (83) n'est pas modulé et le signal constitue une fréquence porteuse pure dont une fraction est injectée dans la ligne (95), le signal de réception y étant combiné et le détecteur (84) utilisant donc l'oscillateur (83) comme oscillateur local. Le signal démodulé, représentatif des données (réponses) émanant des transpondeurs, ainsi obtenu est injecté dans le circuit amplificateur (85) qui met en forme les signaux digitaux (bits) pour les mettre à disposition du microprocesseur par la ligne (99); de plus, une autre ligne (CD) informe ce dernier du fait que des données sont prêtes à être réceptionnées, c'est à dire qu'un transpondeur répond (carrier detect).

La figure 9 montre un exemple de raccordement de plusieurs interrogateurs (I1 à I4) au moyen d'une ligne de transmission (13) les reliant à l'unité centrale de traitement (Ct) qui concerne le poste de péage (Pp), chaque interrogateur créant une zone de capture individuelle (3) pour chaque voie de circulation.

Cette liaison permet le transfert des données résultant des diverses transactions vers un centre de traitement pour la gestion, mais aussi cette liaison permet de synchroniser les divers interrogateurs raccordés.

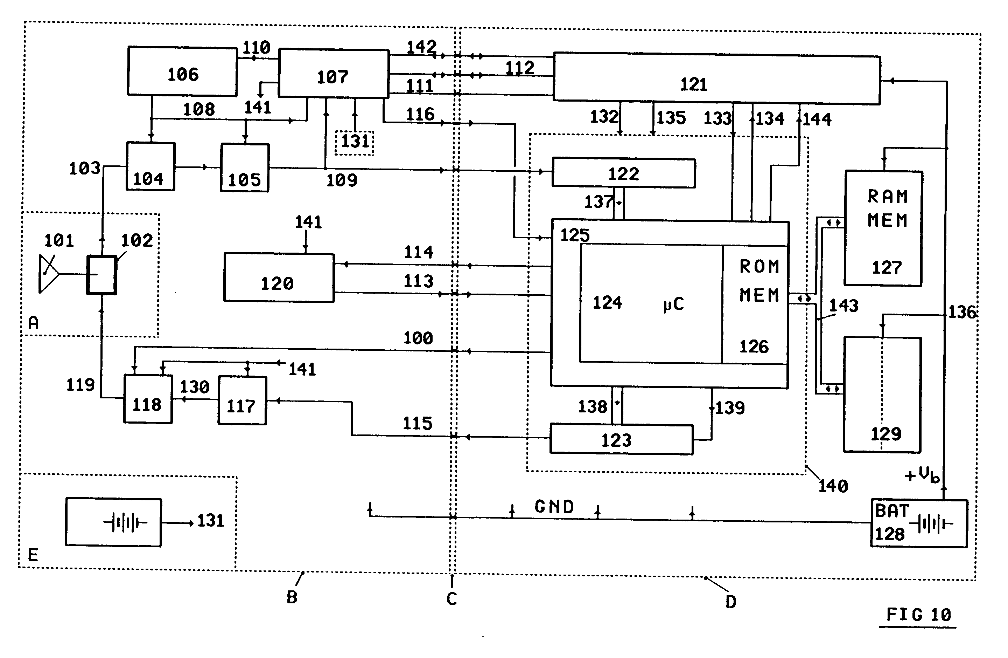

La structure interne d'un transpondeur est décrite dans la figure 10 qui se compose de deux parties, d'une part le transmetteur dans l'encart (B) et d'autre part le module de péage dans l'encart (D), la connexion des deux parties se faisant au niveau du connecteur (C) et qui comprend les bornes de contacts électriques, les 2 éléments mâle-femelle du connecteur faisant respectivement partie du boîtier du transmetteur en jouant le rôle de réceptacle pour y insérer le module de péage qui lui contient l'autre partie faisant partie intégrante du boîtier moulé de celui-ci.

La partie transmetteur (A et B) se compose, dans l'encart (A), de l'antenne (101) de transmission ( compatible avec l'exemple de transmission adopté pour l'interrogateur) qui est connecté au coupleur directionnel (102) permettant l'usage de la même antenne pour l'émission et la réception, cette partie (A) dépend essentiellement de la technique de transmission adoptée.

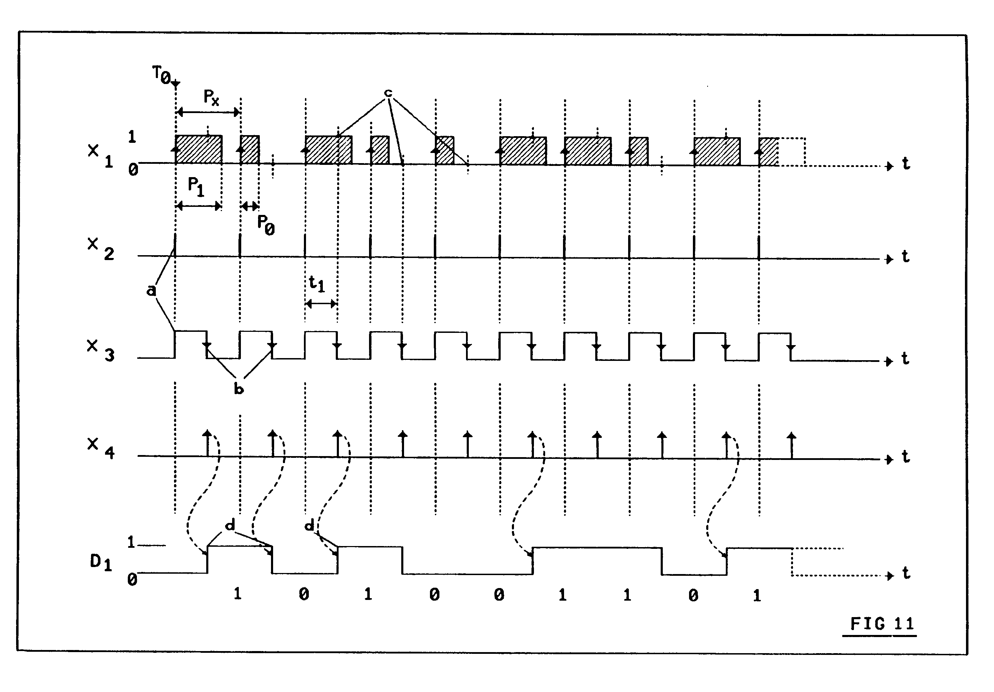

Le signal de réception (103) du transmetteur (encart B) est détecté et extrait de sa porteuse par le circuit de détection (104) qui est suivi d'un étage d'amplification (105) et de mise en forme du signal digital (tel que représenté dans la fig. 11, tracé X1).

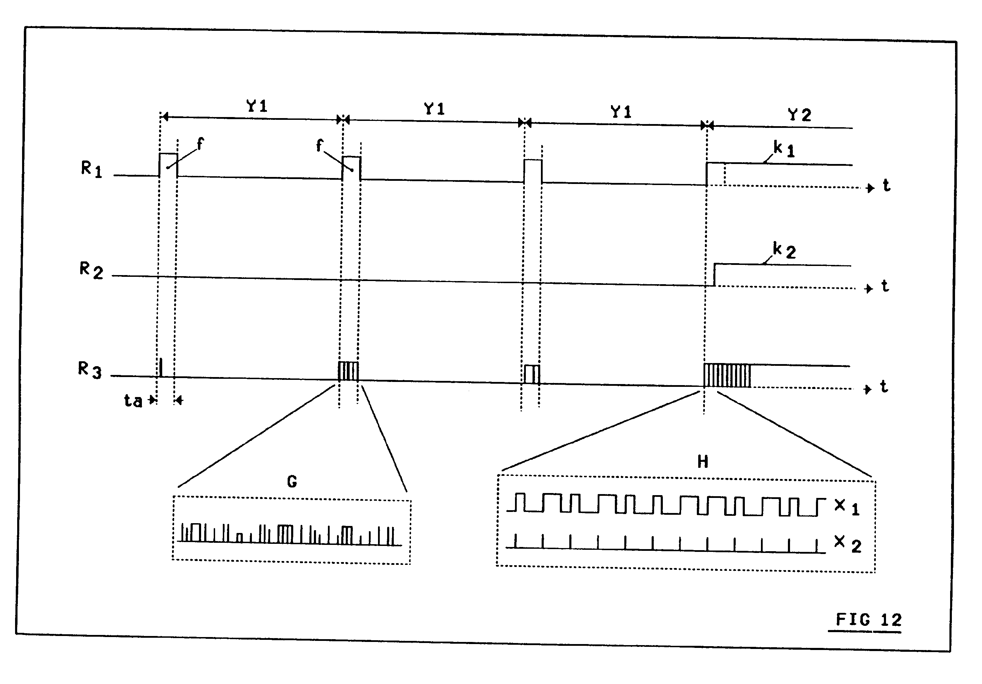

Le signal obtenu est dirigé vers le circuit (107) qui consiste en un oscillateur et boucle à verrouillage de phase destiné à extraire la composante horloge que devrait contenir un signal réellement émis par un interrogateur (cfr. fig. 11 et 12) et de vérifier si cette composante possède la bonne fréquence.

Le circuit (107) est en liaison avec le circuit (106) générateur d'impulsions cycliques qui active, à chaque impulsion via la ligne (108), régulièrement mais brièvement (de l'ordre de la milliseconde), les circuits de réception (104) et (105); ces impulsions ont la forme telle que montrée dans le tracé (R1 de la fig. 12), la fréquence de ces impulsions étant telle que la réception soit activée au moins une à deux fois dans le temps que prend la transmission d'un télégramme de demande d'un interrogateur.

Si pour l'exemple, le télégramme de demande prend 10 millisecondes et ceci toutes les 60 millisecondes (cycle d'interrogation), le générateur d'impulsion (106) peut pour que la détection puisse se faire sans rater les émissions d'un interrogateur, fournir des impulsions de 1 milliseconde et ce toutes les 8 millisecondes, ce procédé permet de réduire la consommation du circuit de réception d'environ un facteur 8 ce qui est appréciable pour tout équipement fonctionnant sur pile.

Tant que le circuit (107) n'a pas confirmé la détection de cette composante d'horloge en activant la ligne (110) dont le signal est représenté à la fig. 12, tracé (R2), la ligne (108) continue à générer des impulsions correspondant à de courtes périodes d'écoute en réception.

La sychronisation du circuit (107) avec le générateur d'impulsions (106) est faite par la même ligne (108) qui lui indique les moments d'écoute nécessitant une période d'activité du circuit (107) et pouvant se mettre en veille en dehors de ces périodes (l'objectif est de limiter au maximum la consommation des circuits en ne les faisant fonctionner que sporadiquement).

La confirmation de détection d'un signal correspondant à un interrogateur est envoyée sur la ligne (112) pour activation du module de péage via la borne du connecteur; la ligne (112) sert aussi au transmetteur pour savoir si un module de péage lui est connecté, par l'analyse du niveau de tension par le circuit (7); tension qui est différente lorsque la borne est "en l'air" ou si elle est connectée à un module de péage. Si le transmetteur dispose de sa propre alimentation ou pile (option (E) qui fournit la tension par la ligne 131), cette détection est utile pour désactiver complètement le transmetteur s'il n'y a pas de module de péage branché.

La distribution des tensions d'alimentation aux divers circuits internes du transmetteur est réalisée par la ligne (111) et pilotée par le circuit (107), ce circuit jouant le rôle de superviseur pour l'activité du transpondeur.

L'activation des circuits (117, 118, 120) est réalisée par la ligne de contrôle (141).

Le signal démodulé de réception (109) est mis a disposition du processeur du module de péage, via une borne du connecteur, pour analyse des données reçues.

La ligne (115) sert à envoyer les données digitales générées par le processeur du module de péage au circuit modulateur (117) lequel transpose les états logiques "0" et "1" en deux fréquences de modulation selon le principe FSK (Frequency Shift Keying).

Cette modulation en fréquence est envoyée au circuit (118) pour superposer le signal (130) à la porteuse RF par modulation de celle-ci en BLU (modulation à Bande Latérale Unique ou Single Side Band), la porteuse étant celle, émise par l'interrogateur, qui est captée par l'antenne du transmetteur et une fraction de cette porteuse, mais modulée avec les données du télégramme de réponse, est réfléchie ( signal 119 ) vers l'interrogateur via l'antenne (101) et le coupleur (102).

Le circuit (118), modulateur de type BLU, peut faire usage de la caractéristique propre à une diode de type varicap ou varactor, caractéristique qui comporte une variation de la capacité de jonction du semiconducteur en fonction de la tension appliquée à ses bornes, circuit qui permet de générer la modulation de type d'amplitude d'une fréquence porteuse par l'absorption de l'énergie du signal de cette porteuse en désadaptant une ligne de transmission, de manière contrôlée par la présence de la capacité variable de la diode varicap en un endroit déterminé de cette ligne; l'énergie résiduelle de la porteuse en sortie de ce modulateur comporte une fréquence porteuse identique à la porteuse incidente mais avec une composante de modulation d'amplitude (BLU) possédant les caractéristiques du signal de modulation (130) appliqué aux bornes de la (ou les) diode(s) varicap.

La polarisation d'une diode varicap ne nécessite que très peu d'énergie, caractéristique très intéressante pour l'application présente.

La modulation de type BLU présente deux avantages majeurs; l'un parce que le rendement de la transmission des données de réponse est meilleur et l'autre permettant la réception et la démodulation de ces signaux au niveau de l'interrogateur de manière plus sûre car le signal de réponse est perturbé par l'effet Doppler qui affecte la transmission entre fixe et mobile à cause de la vitesse de déplacement du véhicule dans l'axe de propagation des ondes radio.

Ceci crée un glissement de fréquence de la porteuse qui, dans le cas présent, est multiplié par deux car celle-ci fait un aller-retour vers le transpondeur puis réfléchit vers l'interrogateur.

Avec la modulation du signal de réponse, la détection et la démodulation d'un signal de type BLU est beaucoup moins sensible à la présence de ce glissement de fréquence porteuse.

L'utilisation d'une modulation différente pour l'émission et la réception des données permet de discerner facilement l'origine des émissions et de rejeter ce qui n'est pas utile.

D'autre part, la technique d'envoi des messages de réponse par un procédé de "réflecteur modulant" qui utilise l'énergie du poste fixe pour renvoyer le télégramme de réponse à celui-ci, permet au niveau du transmetteur mobile, de ne pas avoir besoin de source d'émission ni de puissance pour générer cette source et dès lors, de bénéficier d' une substantielle économie d'énergie ce qui permet d'envisager un fonctionnement autonome du transpondeur dans le véhicule.

Le circuit (120) est un registre à décalage de 64 bits par exemple, qui est préprogrammé en fabrication avec le numéro de série du transmetteur et comprend un code permettant de définir la catégorie du véhicule auquel il est destiné.

Le registre (120) est initialisé par la ligne (141), le signal (114), issu du module de péage, sert d'horloge pour la cadence de décalage des bits dans le registre (120).

Les bits qu'il contient sont sérialisés sur la ligne (113) en sortie pour lecture par le module de péage. Après lecture du contenu de ce registre, le module de péage signale, par la ligne (142), qu'il a terminé et que le circuit superviseur peut désactiver le registre (120).

L'analyse des informations ainsi recueillies dans le module de péage permet de vérifier s'il peut être branché sur ce transmetteur (et par là, sur le véhicule en question) et si oui, de définir la catégorie du véhicule concerné.

La ligne (GND) représente la référence électrique d'alimentation (0 volt) et les signaux pour l'ensemble des circuits électroniques du transpondeur.

La ligne (142) sert également à informer le module de péage que celui-ci est branché sur un transmetteur, par détection de l'état logique sur cette ligne.

La partie (D) représente sous forme schématique, la description du module de péage dont le circuit central est constitué d'un micro-contrôleur (entouré d'un pointillé (140)); les diverses fonctions sont réalisées par programme, consigné dans la mémoire ROM (126) du circuit sous forme d'une liste d'instructions plus ou moins élémentaires et figé de manière permanente dans cette mémoire à la production du circuit.

Le circuit de supervision (121) sert d'une part à assurer la distribution des alimentations aux circuits du module de péage et au transmetteur via la ligne (111). D'autre part, il surveille le signal (112) pour éventuellement activer le micro-contrôleur s'il y a lieu, via la ligne (132).

Quand ce signal logique est à l'état "0" ou non actif, le micro-contrôleur passe en mode veille ( standby ) qui consiste en un mode à très faible consommation d'énergie et le circuit est à l'arrêt mais le peu d'énergie est consommé pour la sauvegarde des états internes de ce circuit (140).

La ligne (135) sert à alimenter le circuit micro-contrôleur du module de péage lorsqu'il est branché sur le transmetteur, sinon le micro-contrôleur est désalimenté par le circuit (121) qui détecte un branchement (ou débranchement) par la ligne (142).

En régime débranché, le circuit (121) reste alimenté en régime statique et bien sûr, la mémoire vive RAM (127) qui contient les paramètres de fonctionnement et les comptes de péages.

Le circuit (129) gérant toutes les fonctions d'encryptage (confidentiels) possède une zone mémoire spéciale destinée à la conservation (et la protection) des clefs d'encryptage et codes d'accès; cette mémoire, interne au circuit (129), ne peut être relue par le processeur et toutes les opérations sécurisées se font dans ce circuit.

Les données contenues dans la mémoire du circuit (129) sont sauvegardées par la pile d'alimentation via la ligne (136).

La mémoire (127) est directement alimentée par la pile (128) via la ligne (136) qui alimente aussi le circuit (121).

Les signaux (143) permettent la gestion des données en mémoire (127) et du circuit (129) par le micro-contrôleur.

Le signal logique (133) change d'état lors de l'insertion du module dans le transmetteur (mise en connexion) et permet au circuit (124) de s'initialiser (reset).

Après initialisation, qui consiste en une série de vérifications fonctionnelles internes et à la lecture du code du transmetteur (120), le micro-contrôleur indique par le signal (134) qu'il est prêt ou non au circuit (121).

Le micro-contrôleur (140) dispose des interfaces (125) lui permettant de communiquer avec les circuits périphériques.

Après vérification du code du transmetteur et comparaison avec la liste de codes en mémoire RAM (127), le signal logique (134) indique au circuit (121) que celui-ci peut recevoir et accepter (quand il en aura) des demandes d'activation sur la ligne (112) du transmetteur.

Lors d'une transition de la ligne (112), le circuit (121) active le micro-contrôleur par la ligne (132) qui redémarre son programme qui lui permet entre autres, de lire et d'analyser le signal de réception sur la ligne (109) en passant par le registre à décalage (122), destiné à convertir les bits sérialisés en paquets de 8 bits, appelés "octets", plus facilement manipulables par le micro-contrôleur. La première mission de celui-ci est de détecter le début d'un télégramme puis d'en acquérir tous les bits convertis en octets et de vérifier si le nombre reçu est correct.

Après quoi, le programme passe à l'analyse de la partie "en-tête" qui contient le numéro (en clair) d'identification de la société d'exploitation du poste de péage et vérifie avec le numéro ou la liste de numéros contenus dans la mémoire RAM (127).

Si l'en-tête correspond, c'est que le module de péage possède un compte pour cet exploitant et que donc une transaction est possible.

Après ce test et s'il est positif, le programme décrypte (par le circuit (129)) le reste du télégramme en utilisant une clef faisant partie des paramètres de l'exploitant, injectés dans la mémoire RAM (127) lors de la validation du module de péage; clef qui est définie par le numéro donné dans l'en tête et qui doit nécessairement faire partie de liste de clefs qui sont en mémoire.

Une fois le télégramme décrypté, un test de validité est effectué avec le code de contrôle permettant de vérifier l'intégrité du contenu du message après quoi, le code représentatif de la macro-instruction (type de transaction) est extrait du paquet de données et le micro-contrôleur exécute le sous-programme de traitement spécifique qui correspond à cette transaction.

Chaque code de transaction (macro-instruction) est représenté par un sous-programme correspondant dans la mémoire ROM (126) du micro-contrôleur (140), ceci permet selon les besoins futurs, de compléter la bibliothèque de sous-programmes et donc de permettre l'extension du système à d'autres fonctions.

Après exécution du sous-programme de traitement, le micro-contrôleur repasse la main au programme principal qui met à jour les paramètres internes de fonctionnement tels que compteur d'interrogations, numéro de transaction, etc... et prépare le télégramme de réponse.

Dès que le télégramme de réponse peut être envoyé (voir fig. 6 pour l'explication de la composante de retard aléatoire), le circuit de sérialisation (123) est chargé par octet à la fois via les lignes (138) et sérialisé par les lignes de contrôle (139) à une cadence déterminée par le micro-contrôleur.

Les bits se présentent séquentiellement sur la ligne (115), en entrée du modulateur (117) qui a été activé par la ligne (141), dès que le dernier bit est émis, le programme complète la mémoire des historiques avec les caractéristiques de la transaction qui vient d'avoir lieu et après quoi, il peut reprendre la phase d'écoute et le cycle peut recommencer.

Le micro-contrôleur possède un compteur de temps (par programme) qui permet de signaler par la ligne (134) qu il n'y a plus de messages reçus depuis un certain temps et qu il y lieu de repasser en mode veille.

Ce compteur peut également servir à signaler au programme de traitement que le temps pendant lequel le transpondeur reste activé devient anormalement long (le véhicule peut être bloqué sous un interrogateur).

Le programme peut dès lors décider de forcer la désactivation du transpondeur pendant un délai déterminé (quelques minutes, par ex.) en commutant la ligne (144) pour enclencher ce délai dans le temporisateur que contient le circuit (121), après ce délai l'ensemble repasse en mode veille et le transpondeur peut redevenir opérationnel.

La figure 11 illustre le mode de transmission et de modulation utilisé pour la transmission du poste fixe interrogateur vers les transpondeurs mobiles (télégrammes de demandes).

Le graphique (X1) représente sur l'axe du temps (t), la modulation de la porteuse d'émission sous forme de modulation d'amplitude, proche ou égale du "tout ou rien", les zones hachurées montrent la présence de porteuse (énergie émise), les zones non hachurées montrent les périodes où aucune énergie est transmise, l'enveloppe étant représenté en trait plein et représentant le signal tel que reçu derrière le détecteur (et amplifié) du transpondeur.

Cette modulation s'appele PWM (Pulse Width Modulation) c'est à dire modulation de largeur d'impulsion. Le signal ainsi obtenu possède deux informations: d'une part, l'information digitale ou la valeur des bits du télégramme et d'autre part, une composante horloge (fréquence qui est égale à la cadence de transmission des bits) que l'on peut extraire au niveau du transpondeur.

Le tracé (X2) montre le mecanisme d'extraction de la composante horloge du signal (X1) en détectant les flancs montants qui se présentent à intervalles réguliers et les impulsions (a) sur le tracé (X2) correspondent à chaque flanc montant du signai incident.

Le signal ainsi dérivé (X2) permet l'accrochage d'un oscillateur commandé par une boucle à verrouillage de phase (PLL) qui génère une fréquence d'horloge (X3) synchronisée et en phase avec le signal détecté (X1).

L'horloge est d'allure symétrique; le rapport cyclique est d'environ 50% - 50%, le délais (t1) étant approximativement la moité de la période (Px).

Ce signal d'horloge (X3) possède donc une fréquence qui "suit" fidèlement la cadence des bits du signal reçu d'un interrogateur, donc de valeur connue et valable pour tout interrogateur.

Cette fréquence doit être de valeur déterminée (par exemple 16 Khz. signifiant un débit binaire ou vitesse de transmission de 16 Kbits/seconde) pour que le signal capté (X1) puisse être considéré comme réellement émis par un interrogateur et non du bruit ou des interférences.

Si la boucle à verrouillage de phase (réglée sur la fréquence nominale et avec une plage de capture permettant de compenser les tolérances) peut accrocher la fréquence, il y a beaucoup de chances que ce soit un interrogateur qui émette et l'activation des autres circuits peut avoir lieu dans le transpondeur, ceci sans analyser le contenu binaire du message.

L'extraction des bits du signal (X1) est faite par le micro-contrôleur du module de péage et est réalisée par échantillonnage au milieu de la période (Px), comme indiqué par le tracé (X4).

La distinction d'un bit de valeur "0" ou "1" est faite par la différence de la longueur de l'impulsion, au moment de l'échantillonage, ou bien, elle est encore présente et le bit est associé à une valeur "1", soit encore elle n'est plus présente et le bit vaut "0".

A l'émission, la longueur d'une impulsion (P1) qui correspond à un délai de 75% environ de la période (Px) est définie comme bit = "1" et pour une impulsion (P0) qui correspond à une durée de 25% de (Px), le bit = "0".

Le tracé (D1) montre les changements d'état (d) où les transitions d'un bit à l'autre correspondant à l'échantillonnage du signal (X1) en les points (c).

Le signal digital (D1) déduit est la séquence exacte des bits tels qu'émis par l'interrogateur et reconstituée au niveau du transpondeur mobile.

La figure 12 montre comment le circuit de réception du transpondeur peut analyser un signal reçu, pendant la courte période d'écoute en mode veille et différencier un vrai signal par rapport au bruit qu'il est susceptible de capter.

Le tracé (R1) montre sur l'axe du temps (t), les courtes périodes d'écoutes (ta) suivies d'une période de repos, le cycle ayant une durée égale à (Y1) et il se répète continuellement sauf s'il y a confirmation de détection.

La cadence de répétition est plus rapide que le temps nécessaire à la transmission d'un télégramme par un interrogateur.

Le tracé (R2) montre le signal logique d'activation des circuits internes au transpondeur, non actifs pendant les cycles (Y1) de veille.

Le tracé (R3) représente le signal détecté à la sortie du circuit de réception (il n'y a pas de signal lorsque la réception est inactive, en periode de repos ); l'agrandissement de ce signal détecté en (G) montre la réception d'un signal quelconque, bruité, invalide, mais en (H) par contre, le signal (X1′) possédant la composante (X2′) d'horloge attendue et le circuit de réception validant la détection en activant les autres circuits du transpondeur (R2, a); il reste alors lui-même en réception continue (R1, b) et dès ce moment, le transpondeur est pleinement actif et est apte à capter complètement le prochain télégramme qu'émettra l'interrogateur, la période active (Y2) dépendant du temps que passe le véhicule dans la zone de capture du poste fixe.

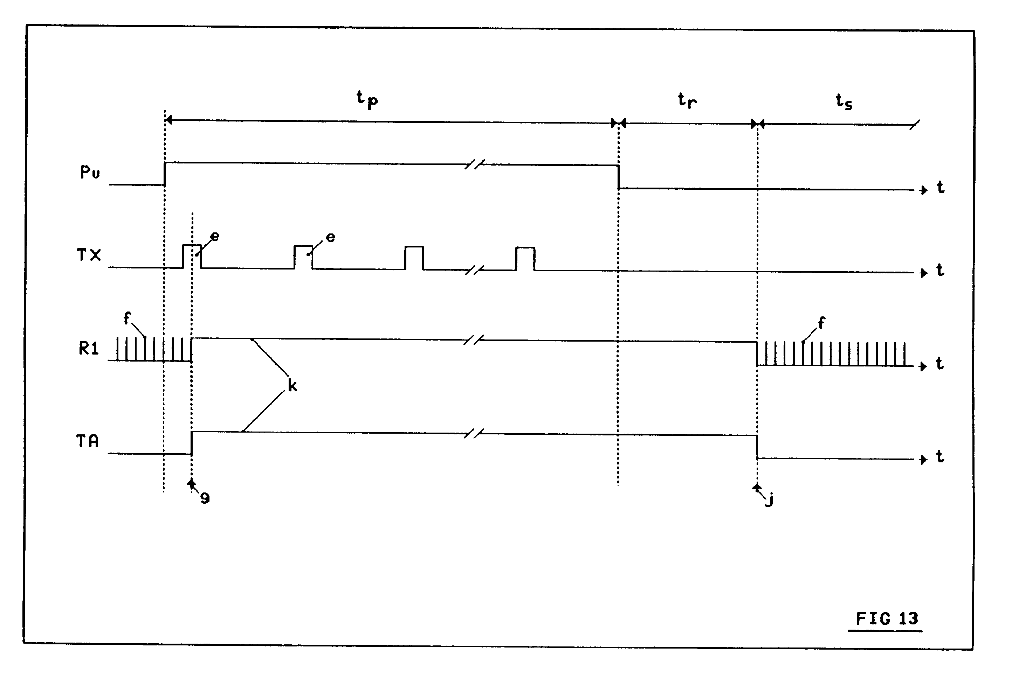

Figure 13, montre que l'approche d'un véhicule muni de son transpondeur dans la zone de capture d'un interrogateur, se traduit par les graphiques illustrant les événements sur l'axe du temps (t).

La présence du véhicule dans la zone de capture est reprise sur le tracé (V1); le véhicule en mouvement "apparaît" dans la zone au début de (tp = temps de présence ).

Le récepteur du transpondeur de bord est en mode veille et écoute sporadiquement selon le tracé (R1); les courts instants d'écoute sont représentés par les petits traits (f), tandis que l'interrogateur fixe émet cycliquement les télégrammes de demandes qui sont captés par le circuit de réception du transpondeur dès l'approche dans la zone de capture, le signal de réception tel que capté étant représenté sur le tracé (TX); les impulsions (e) représentent les télégrammes reçus.

Au point (g), le récepteur du transpondeur détecte un signal valide (voir fig. 11 et 12) et passe donc en réception permanente (R1, k), de même le module de péage passe en mode actif (TA, k).

Pendant le temps où (TA) est actif, le transpondeur est apte à capter les télégrammes, les décoder, exécuter le traitement de la transaction demandée et à répondre (s'il y a lieu) à l'interrogateur fixe.

En pratique, les véhicules approchent un poste de péage à vitesse modérée et donc, le nombre de cycles de demande reçus par un transpondeur lors de son passage dans une zone de capture serait de l'ordre de quelques dizaines, ce qui justifie la grande fiabilité du procédé; même si 50% des télégrammes sont perturbés pour cause d'interférences diverses, la répétition de ceux-ci en nombre important permet de croire à un taux d'erreur ou de non-détection extrèmement faible.

La fin du délais (tp) correspond à la sortie du véhicule de la zone de capture (passage du véhicule sous l'interrogateur); le transpondeur ne capte plus les messages de celui-ci mais un délai supplémentaire est prévu pendant lequel le transpondeur reste actif; ce délai (tr) est un délai de réserve qui évite de mettre trop vite le transpondeur en mode veille, par exemple dans le cas où quelques messages ne seraient pas reçus par perturbation temporaire et que ceci ne serait interprété par le transpondeur comme une sortie de zone de capture.

Si pendant ce délai de réserve aucun message n'est reçu, le transpondeur se met en mode veille (au point j) et son récepteur se remet en écoute pulsée (f), correspondant au mode de fonctionnement à faible consommation.

Le tracé (TA) représente aussi le temps où la consommation d'énergie du transpondeur est la plus forte, soit pendant le délais d'activation du transpondeur (entre pt. g) et j)).

En dehors de ce délai soit tout le temps que le véhicule circule et met pour se présenter à nouveau devant un poste interrogateur de péage, le transpondeur reste en mode veille qui limite la consommation à quelques microAmpères. Le temps pendant lequel le transpondeur est en mode veille est nettement plus long en pratique que le temps d'activation (quelques secondes ou fractions de secondes).

L'ordre de grandeur du rapport entre temps "actif" et temps "veille" pouvant s'exprimer en fractions de dix-millième ( 1 / 10.000) au moins , la consommation moyenne du transpondeur peut donc se calculer comme suit (exemple d'ordre de grandeur):

$$I(veille) + \frac{I(actif)}{10.000} = I(moyen) \text{ par heure}$$

( "I" symbolisant le courant exprimé en Ampères)

L'autonomie peut s'exprimer par la division de la capacité de la pile d'alimentation (en Ampères heure) par la consommation moyenne du transpondeur (I-(moyen)), le résultat donnant le nombre d'heures de fonctionnement du transpondeur.

Vu que I(moyen) du transpondeur est très petit (de l'ordre de quelques microAmpères heure) et que l'énergie disponible dans les piles modernes s'exprime en centaines de miliAmpères heure où même en Ampères heure, l'autonomie du transpondeur peut atteindre des années.

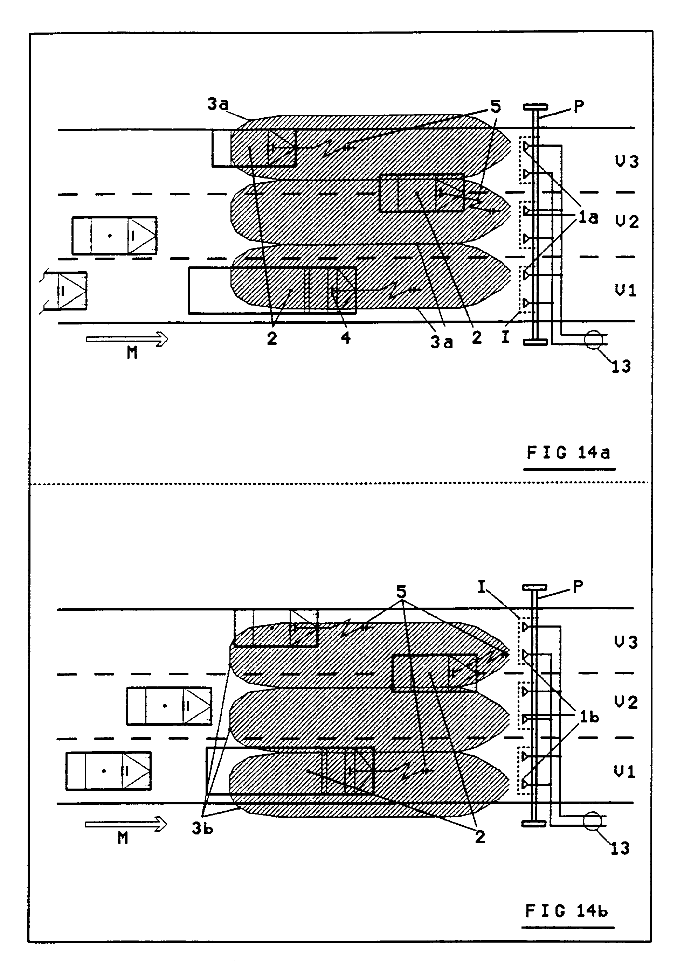

La figure 14, montre une variante pour la mise en oeuvre des interrogateurs fixes permettant d'assurer une excellente couverture pour un axe de circulation à voies multiples.

Les véhicules n'étant pas nécessairement bien alignés dans chaque voie, il est fort probable que, si des dispositions ne sont pas prises, un véhicule se présente sur un axe équidistant de deux interrogateurs et que de ce fait le transpondeur de bord ne puisse pas valablement capter les messages de demandes. Pour éviter ce problème l'interrogateur correspondant à chaque voie pourrait être dédoublé de manière à ce qu'il génère deux zones de captures parallèles et décalées sur le plan horizontal.

Les zones de capture se chevauchent partiellement mais pour éviter la perturbation mutuelle de deux parties de l'interrogateur, chaque partie est activée alternativement à chaque cycle d'interrogation.

La figure 14a, illustre la couverture de l'axe comprenant 3 voies de circulation (V1, V2, V3) et ce au cycle C1 (pour l'exemple).

Les interrogateurs dédoublés (I), montés sur le portique (P) ont la partie (1a) active lors de ce cycle d'interrogation, la partie (1b) par contre n'est pas active ou reste en réception.

D'autre part, les trois interrogateurs (1a) sont reliés ensemble pour former un groupe fonctionnel, via la ligne (13); les trois interrogateurs (1b) forment eux aussi un groupe de la même manière.

Les véhicules (2) se dirigent vers le portique selon la direction du trafic (M) et sont pris en compte dans les zones de capture (3a), représentées par les zônes hachurées; la communication peut dès lors s'effectuer (5) entre les transpondeurs (4) et les interrogateurs respectifs (I).

Le véhicule (2) roulant à cheval sur les voies (V2 et V3) est couvert par l'interrogateur (1a) destiné à la voie (V2).

La figure 14b, montre la même installation mais à un instant plus tard, correspondant au cycle suivant d'interrogation; ce sont les parties (1b) des interrogateurs (I) qui sont actifs et les zônes hachurées montrent la nouvelle couverture du site par les zônes de capture (3b).

Les véhicules (2) ont bien sûr progressé et peuvent toujours communiquer avec les interrogateurs (I) respectifs, mais avec la partie (1b) de ceux-ci.

Le véhicule (2) qui roule toujours à cheval sur les deux voies de circulation (V2, V3) communique cette fois (5) avec l'interrogateur (I), partie (1b) couvrant la voie (V3).

Cette technique permet d'assurer une couverture "sans ombres" de l'ensemble du site.

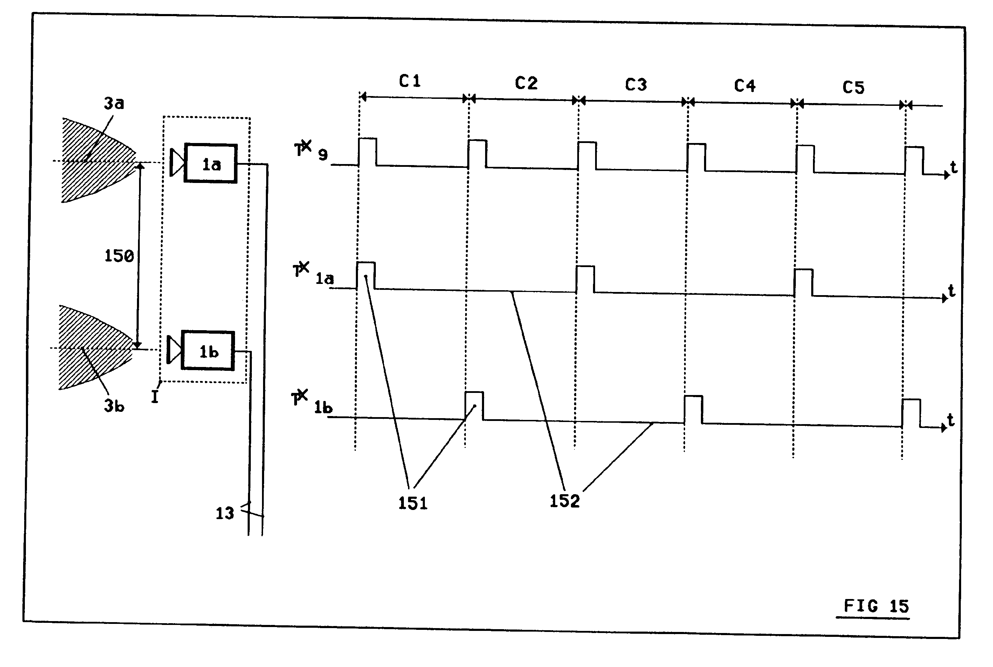

La figure 15 illustre en détail un exemple de dédoublement des interrogateurs (I) qui sont constitués des deux parties (1a et 1b); pour l'exemple, chaque partie est un interrogateur parfaitement autonome et de fonctionnement indépendant, la séparation pourrait aussi se limiter à la partie antenne, dédoublée à elle seule et avec un circuit de commutation sélectionnant l'une ou l'autre.

Les deux interrogateurs sont écartés l'un de l'autre d'une distance (150) sur le plan horizontal et produisant des zones de captures (3a) et (3b) parallèles.

Le graphique (TX(g)) montre les cycles d'interrogation globaux (C1 à C5, etc...) du poste interrogateur (I) répartis dans le temps (t).

Les tracés (TX(1a)) montre les instants où la partie (1a) est active (cycles impairs), les débuts de cycles étant indiqués par l'envoi des télégrammes de demande (151), les périodes d'écoute (152) pouvant être assurés par les deux parties (1a et 1b) en même temps, le récepteur qui est le mieux placé captant le télégramme de réponse, peut dès lors envoyer l'information vers le poste central de traitement.

A noter que, dans ce cas, la réponse à un télégramme de demande peut être valablement captée et interprétée par l'interrogateur voisin, ce qui peut augmenter nettement la fiabilité du système.

Il en est de même pour le tracé (TX(1b)) correspondant à l'activité de la partie (1b) de l'interrogateur (I) et qui se fait lors des cycles pairs.

Ce graphique montre le principe de l'alternance de l'activité de l'interrogateur ainsi dédoublé.

Au moyen des liaisons (13), les divers interrogateurs installés peuvent être synchronisés de manière à ce que toutes les parties (1a) soient actives en même temps puis, au cycle suivant, toutes les parties (1b).

Le fait de dédoubler les interrogateurs complètement augmente sérieusement la disponibilité du système et la continuité de l'exploitation du poste de péage, même en cas de défaillance d'un des éléments d'un interrogateur.

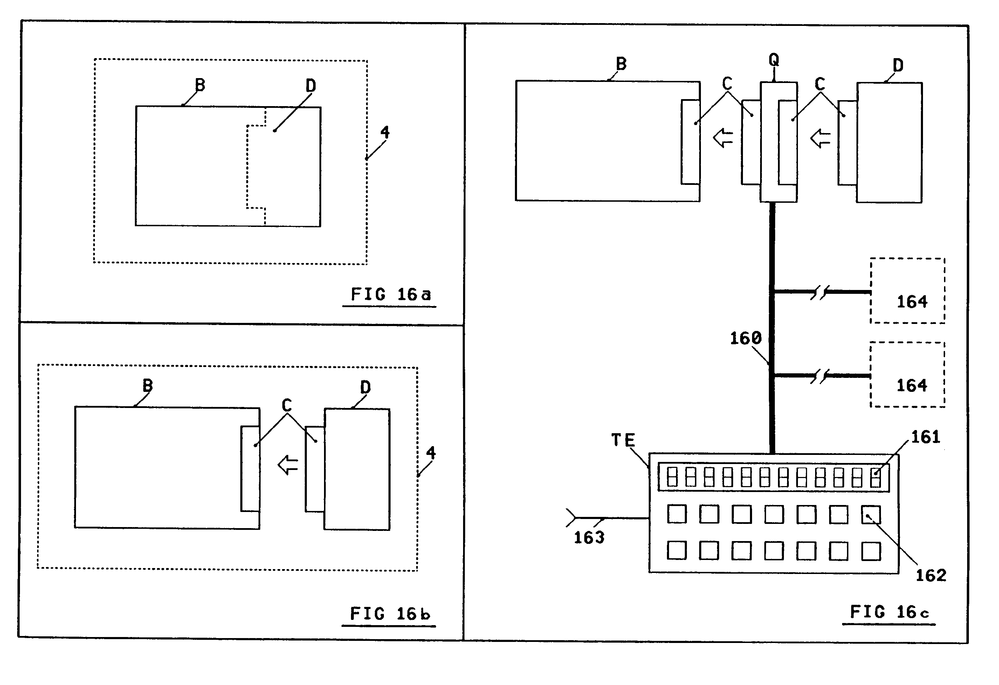

La figure 16, montre des exemples de combinaisons possibles pour la réalisation des transpondeurs.

La figure 16a, montre une version monobloc d'un transpondeur (4), avec la partie transmetteur (B) et la partie module de péage (D) combinée dans un même boitier.

La figure 16b montre un transpondeur (4) en deux éléments, le transmetteur (B) en boitier séparé, avec un connecteur (C) destine à recevoir le module de péage indépendant (D).

La figure 16c montre quant à elle, l'évolution possible du système au moyen d'un module d'interface (Q) qui permet de raccorder, via un cable de liaison (160), divers équipements périphériques (installés dans le véhicule) au transmetteur (B), en utilisant le connecteur (C) de celui-ci.

Le module de péage (D) peut donc s'emboîter dans le connecteur compatible de l'interface (Q).

Les périphériques pouvant être, par exemple: un terminal (TE), disposé sur le tableau de bord du véhicule, qui dispose d'un élément d'affichage (161) et d'un clavier (162), l'alimentation de cet ensemble pouvant être assurée par la batterie du véhicule, via la liaison (163).

D'autres périphériques (164) pouvant aussi être reliés au système pour par exemple: guidance routière, informations météo, etc..., le transmetteur de bord pouvant servir d'unité de communication à courte portée et son utilisation peut être diversifiée.

La réalisation pratique des divers éléments constituants pourrait largement faire appel à la technologie des circuits électroniques intégrés et plus particulièrement pour le module de péage, qui peut comprendre un circuit intégré spécifiquement développé pour l'application incluant: le micro-contrôleur (microprocesseur avec périphérie complete sur une puce) dédicacé pour assurer les fonctions de péage et annexes avec les dispositifs de mise en veille et de sauvegarde des circuits de mémoires.

En production de masse, une telle technologie permet la commercialisation de ce produit d'une complexité certaine à un niveau de prix très compétitif.

Il en est de même pour l'électronique dans la partie transmetteur qui pourrait se résumer à un ou deux circuits intégrés.

L'antenne hyperfréquence pourrait être judicieusement fabriquée sous forme de réseau d'éléments rayonnants en utilisant la technique micro-strips ou micro-rubans gravés sur substrat.

## Revendications

1. Système de télétaxation ou de télépéage pour véhicules, faisant appel à des postes fixes d'interrogation (1) placés au-dessus ou sur le côté des voies de circulation et d'appareils récepteurs / répondeurs, appelés transpondeurs (4), montés à bord des véhicules (2), système dans lequel chaque poste fixe (1) comprend une unité d'émission et de réception de signaux capable de couvrir une zone suffisante en direction des véhicules qui arrivent pour interroger et communiquer avec les transpondeurs (4) de ces véhicules (2), chaque transpondeur (4) comportant des moyens pour la réception des signaux (5) émis par les postes d'interrogation (1) et pour l'émission de signaux en réponse aux signaux du poste d'interrogation, le transpondeur (4) contenant également en mémoire des données relatives à des valeurs monétaires, la perception des droits de passage ou taxes étant effectuée automatiquement et à distance par télétransmission, lorsque les signaux échangés entre le poste d'interrogation (1) et le transpondeur (4) se trouvant à sa portée répondent à certaines conditions prédéterminées, le poste fixe interrogateur (1) émettant continuellement un message signalant d'une part sa présence et qui consiste en un télégramme (TS) contenant en particulier, une instruction de demande de perception d'un droit de péage tandis que le transpondeur (4) monté à bord du véhicule (2) comporte des moyens pour exécuter cette instruction donnée par l'interrogateur en particulier pour effectuer le paiement du droit de péage en décomptant du solde des points en compte dans la mémoire du transpondeur, un certain nombre de points équivalents au droit à payer, la disposition étant telle que tout transpondeur situé dans la zone de portée (zone de capture 3) de l'interrogateur (1) capte le télégramme, analyse son contenu et le transpondeur (mobile) (4) ne renvoie un télégramme d'acquit que si la demande est acceptée et correctement interpretée, caractérisé en ce que le télégramme (TS) émis par le poste interrogateur vers le transpondeur contient en particulier un code d'identification représentatif du poste fixe de péage (1), afin de permettre au transpondeur (mobile) (4) d'identifier celui-ci pour permettre de réaliser des transactions de péage de manière anonyme, sans que l'identité de l'usager ne soit nécessairement impliquée dans les données transmises entre le transpondeur (4) et le poste fixe interrogateur (1) et en ce que la sécurisation des données échangées est réalisée par des moyens d'encryptage faisant appel à une clef sélectionnée grâce à un code inclus dans le télégramme, parmi une liste de clefs mémorisée dans le poste fixe d'interrogation et le transpondeur, la clef elle-même restant secrète.

2. Système suivant la revendication 1, caractérisé en ce que l'appareil transpondeur (4) est constitué de deux parties séparables dont l'une, appelée transmetteur (fig 16, B), comprend essentiellement une unité de transmission à distance et des circuits électroniques d'interface et l'autre, appelée module de péage (fig 16, D), contient des circuits de mémoire, de protection d'accès et de contrôle, en particulier les circuits électroniques de décision logiques ( par microprocesseur et logiciels nécessaires ) pour remplir, en interne, les fonctions qui lui sont demandées à distance, sous forme d'instructions à exécuter et gère le protocole de dialogue avec l'appareil interrogateur, l'ensemble des opérations dites "intelligentes" ou à caractère confidentiel étant exécutées par lui.

3. Système selon l'une quelconque des revendications 1 et 2, caractérisé en ce que le module de péage (D) constitue l'élément porteur de "valeurs", équivalent à un compte (ou des comptes ) crédité(s) d'un nombre de points représentatif de la somme versée par l'usager anticipativement (payement " bons à valoir " ou par provision ),

lors de la validation ou initialisation du module de péage, le nombre de " points " en compte dans le module représente le solde restant à valoir pour des transactions de péage à venir.

4. Système selon la revendication 1 ou 2, caractérisé en ce que le module de péage (D) constitue l'élément porteur de "valeurs", équivalent à un compte (ou des comptes) accumulant un nombre de points représentatif d'un crédit octroyé à l'usager qui règle son compte (payement à postériori), lors de la validation ou initialisation du module de péage, le nombre de " points " en compte dans le module représente le total des droits à payer pour des transactions de péage passées.

5. Système selon la revendication 1 ou 2, caractérisé en ce que le module de péage (D) constitue l'élément porteur de "valeurs" qui dispose en mémoire (127) des données relatives à un compte bancaire permettant d'informer le poste interrogateur du compte à débiter pour le payement du droit de passage ou taxe.

6. Système suivant l'une quelconque des revendications 3 à 5, caractérisé en ce que le poste fixe (1) peut accepter les différents types de paiements et que ceux-ci peuvent co-exister, de même pour les modules de péage (D) qui peuvent être choisis par l'usager selon le type de paiement qu'il préfère.

7. Système selon l'une quelconque des revendications 1 et 2, caractérisé en ce que pendant la présence d'un transpondeur (4) dans une zone de capture (3) d'un poste fixe interrogateur (1), ce transpondeur (4) répondra continuellement par un télégramme d'acquit (RS) à chaque télégramme de demande (TS) reçu de l'interrogateur (1), pour autant qu'il valide ces messages de demande, de manière à confirmer sa présence dans la zône.

8. Système selon l'une quelconque des revendications 1 à 7, caractérisé en ce que les télégrammes échangés à distance entre poste fixe interrogateur (1) et transpondeur (4) mobile, consistent en des données digitalisées, transmises en paquets et utilisant un support de transmission du type à ondes électromagnétiques ou autre, chaque télégramme transmis étant sécurisé, pour se prémunir des fraudes de toute nature, par technique d'encryptage (selon le standard DES, par exemple) et faisant appel à une clef qui sert au brouillage des données à l'émission et d'une clef (la même ou une autre) qui est indispensable pour reconstituer (décrypter) le message à la réception.

9. Système selon la revendication 8, caractérisé en ce que une partie des données du télégramme de demande (TS) est transmise "en clair" (S1, S2) et est destinée à informer tous les transpondeurs (4) qui se présentent, de l'identité (sous forme d'un code représentatif) de la société exploitante qui utilise le poste interrogateur (1) ; dans le transpondeur (4), le module de péage (D) peut vérifier si celui-ci possède une "souscription ou compte ouvert" pour cet exploitant, ce qui lui permet de ne se préoccuper que des messages d'interrogateurs qui le concernent.

10. Système selon l'une quelconque des revendications 1 à 9, caractérisé en ce que pour éviter une double ou multiple taxation d'un même véhicule, le module de péage (D) mémorise l'identité du dernier poste interrogateur (1) auquel il a répondu, refusant d'exécuter à nouveau la même transaction en répondant par un message d'acquit avec mention " déjà exécuté ", le véhicule devant sortir de la zône de capture (3), c'est à dire que le transpondeur (4) doit repasser en mode de veille pendant un certain délai pour réactiver la "taxabilité" de ce même poste fixe.

11. Système selon l'une quelconque des revendications 2 à 10, caractérisé en ce que le passage n'est admis comme valable que si le module de péage (D) a acquitté l'instruction de demande (TS), dans tous les autres cas, le poste fixe (1) constate une irrégularité et peut prendre des actions de retorsion telles que: avertissement du conducteur par signalisation ou prise d'une photo du véhicule, enregistrement vidéo, etc..., pour que l'exploitant peut soit recourir à une perception manuelle soit identifier l'usager contrevenant pour recours ultérieur.

12. Système selon l'une quelconque des revendications 2 à 11, caractérisé en ce que le module de péage (D) contient une fonction complémentaire qui consiste en une mémoire ou une zône de mémoire (127), réservée à cet effet et dans laquelle l'historique des diverses transactions de péage effectuées est répertorié, l'enregistrement des caractéristiques de chaque transaction dans les mémoires destinées à cet effet, se faisant de manière automatique dans le module de péage, le nombre de transactions ainsi mémorisées dépend essentiellement de la capacité de cette mémoire qui possède éventuellement une structure de mémoire circulaire (par ex. 250 ou 500 dernières transactions enregistrées) toutes les données sont sauvegardées soit dans une mémoire de type non-volatile soit par la pile d'alimentation incorporée au module (BAT128), si bien que l'usager a la possibilité, lors d'une opération de validation dans un bureau agréé par exemple, de demander l'impression de la liste des transactions enregistrées dans la mémoire de son module de péage.

13. Système selon l'une quelconque des revendications 1 à 12, caractérisé en ce que le dialogue entre le poste fixe interrogateur (1) et le ou les transpondeur(s) (4) présents dans la zône de capture (3) se fait par multiplexage dans le temps entre les différents transpondeurs (FIG. 5), par affectation d'une tranche de temps à la communication avec chacun des transpondeurs mobiles, le contrôle de cette fonction étant tenu par l'interrogateur.

14. Système selon la revendication 13, caractérisé en ce que le protocole de dialogue, entre poste interrogateur (1) et transpondeur (4), fait usage d'une notion de cycle de durée constante (55) et répétitif et en début duquel l'interrogateur émet un télégramme (55) de demande (TS), de longueur fixe, suivi d'une période d'écoute de durée équivalente (54) ou légèrement supérieure à un multiple du temps imparti pour l'envoi d'un télégramme de réponse (Fig. 5, $F_1$-$F_4$), également de longueur fixe pouvant émaner d'un transpondeur mobile (4), lequel ne peut répondre qu'après la fin de la réception à son niveau, du télégramme de demande (51) et dans un délais d'au maximum un nombre multiple de fois moins un, du temps imparti pour la transmission d'un télégramme de réponse (57), le nombre multiple étant déterminé et fixe pour tous les interrogateurs (1) et transpondeurs (4) pour l'application donnée.

15. Système selon l'une quelconque des revendications 13 ou 14, caractérisé en ce que le transpondeur (4) dispose d'un générateur de nombres aléatoires ou pseudo-aléatoires permettant, à chaque cycle d'interrogation, de décaler plus ou moins dans le temps, décalage par tranche de temps égal ou légèrement supérieure au temps imparti à la transmission d'un message de réponse, le moment de la réponse du transpondeur de manière à répartir statistiquement dans le temps imparti à une même période d'écoute d'un interrogateur (1), les réponses ($R_a$, $R_b$, $R_c$...) d'éventuels autres transpondeurs (4) présents aux abords de l'interrogateur (1) et d'éviter ainsi que les messages de réponses ne puissent se brouiller systématiquement (fig. 6).

16. Système selon l'une quelconque des revendications 1 à 15, caractérisé par la présence d'un dispositif permettant de synchroniser les interrogateurs (1) d'un même poste de péage ( du moins pour un même sens de circulation) de façon que chacun d'eux génère des cycles de demandes de manière synchronisée avec les interrogateurs voisins.

17. Système selon l'une quelconque des revendications 1 à 16, caractérisé par des moyens permettant de créer pour chaque bande de roulement un double faisceau de détection essentiellement décalé sur un plan horizontal créant ainsi une double zône de capture (FIG 14) pour les véhicules entrants, des moyens étant également prévus pour activer alternativement, de manière synchrone, l'un ou l'autre faisceau.

18. Système selon l'une quelconque des revendications 1 à 17, caractérisé en ce que les appareils interrogateurs installés sur un poste de péage ou de taxation sont reliés à une unité centrale de traitement informatique (Ct), toutes les transactions effectuées pourront donc être traitées à des fin de gestion (comptabilité, statistiques, etc...), cette unité centrale (Ct) pouvant également assurer les fonctions de synchronisation des apparais interrogateurs (1) et éventuellement décider la mise en oeuvre des actions de recours en cas de fraude telle que, la prise de photo, ou l'enregistrement vidéo, etc...

19. Système selon la revendication 8, caractérisé par un dispositif permettant de sélectionner une clef d'encryptage parmi une liste de clefs, en sorte que les données confidentielles dans le télégramme transmis sont encryptées au moyen d'une clef sélectionnée parmi une liste de clefs différentes, liste de clefs qui est d'application à ce moment-là, une liste similaire est mémorisée dans chaque module de péage (D) et y a été programmée lors de l'initialisation ou validation du module pour cet exploitant, le télégramme contenant un code "en clair" (S2) qui indique le numéro d'ordre de la clef à utiliser dans la liste pour décrypter le reste des données, la clef elle-même restant secrète.

20. Système selon l'une quelconque des revendications 1 à 19, caractérisé en ce que l'interrogateur (1) transmet dans la partie utile, confidentielle et encryptée (S3 S4) son télégramme de demande (TS), le code représentatif de l'instruction (type de transaction) à effectuer et une table de données relatives à cette instruction, ces données sont par exemple: tarifs applicables par catégorie de véhicule, lieu du poste fixe, etc... ou une combinaison de ces données, l'interprétation et le traitement des données, en fonction de l'instruction reçue, incombe entièrement au processeur du module de péage qui seul décide, en fonction des paramètres ou données qu'il a en mémoire, de la recevabilité ou de la suite à donner à la demande de transaction.

21. Système selon l'une quelconque des revendications 8 à 20, caractérisé en ce que certaines données dans la partie confidentielle (S4) d'un télégramme de demande (TS) émanant d'un interrogateur (1) changent à chaque cycle d'émission.

22. Système selon l'une quelconque des revendications 8 à 21, caractérisé en ce que l'interrogateur (1) dispose d'un générateur de nombres aléatoires ou pseudo-aléatoires permettant de créer des télégrammes de demande (TS) de signification identique mais dont le contenu binaire est toujours différent à chaque cycle, malgré l'encryptage.

23. Système selon l'une quelconque des revendications 8 à 22, caractérisé en ce que l'interrogateur (1) possède un dispositif (23) permettant de générer un signal modulé qui comprend, en plus des informations digitales, une composante d'horloge réprésentative de la cadence des bits transmis.

24. Système selon la revendication 23, caractérisé en ce que l'analyse et la vérification de l'existance d'une composante auxiliaire fréquentielle donnée (Fig 11) (composante d'horloge) (X3) dans le signal de modulation capté au niveau des circuits de réception (X1) au transpondeur, permet à celui-ci de déterminer la présence d'un interrogateur fixe.

25. Système selon l'une quelconque des revendications 8 à 24, caractérisé en ce que la modulation (fig. 10; 118) des signaux de réponse du transpondeur vers le poste interrogateur se fait par la modulation de l'énergie, de la fréquence porteuse pure émise par l'interrogateur (1) pendant la période d'écoute de celui-ci, telle que captée au niveau du transpondeur et de manière à réfléchir une partie de l'énergie de la porteuse incidente, à la même fréquence, et en lui ajoutant une composante de modulation de type modulation d'amplitude qui contient les éléments caractéristiques du message de réponse (fig. 10; 130).

26. Système selon la revendication 25, caractérisé en ce que le modulateur d'énergie (fig. 10; 118) du transpondeur, présente les caractéristiques d'un modulateur de type BLU (Bande Latérale Unique ) et que l'interrogateur (1) est muni d'un récepteur de signal d'énergie réfléchie (34) modulé en amplitude), récepteur équipé de telle manière que la détection puisse se faire indépendemment au glissement de phase du signal réfléchi par le transpondeur en mouvement.

27. Système selon la revendication 25 ou 26, caractérisé en ce que le modulateur des données digitales (fig. 10; 117) du transpondeur est un modulateur de fréquence.

28. Système selon l'une quelconque des revendications 25 à 27, caractérisé en ce que le transpondeur possède un circuit de modulation (118), faisant usage de la caractéristique propre à une diode de type varicap ou varactor, caractéristique qui comporte une variation de la capacité de jonction du semiconducteur en fonction de la tension appliquée à ses bornes, circuit qui permet de générer la modulation de type d'amplitude d'une fréquence porteuse par l'absorption de l'énergie du signal de cette porteuse en désadaptant une ligne de transmission, de manière contrôlée par la présence de la capacité variable de la diode varicap en un endroit déterminé de cette ligne, l'énergie résiduelle de la porteuse en sortie de ce modulateur comporte une fréquence porteuse identique à la porteuse incidente mais avec une composante de modulation d'amplitude possédant les caractéristiques du signal de modulation (130) appliqué aux bornes de la ( ou les ) diode(s) varicap.

29. Système selon l'une quelconque des revendications 2 à 28, caractérisé en ce que le transpondeur (4) se compose de deux parties, d'une part le transmetteur (fig 16, B) destiné à être fixé sur le véhicule et d'autre part le module de péage (D), la connexion des deux parties se faisant au niveau du connecteur (C) comportant des bornes de contacts électriques, les deux éléments du connecteur faisant respectivement partie du boîtier du transmetteur en jouant le rôle de réceptacle pour y insérer le module de péage, l'activation ou l'alimentation de l'ensemble est assurée automatiquement lors de l'association des deux parties.

30. Système selon l'une quelconque des revendications 2 à 29, caractérisé en ce que l'appareil transpondeur (4) est pourvu de moyens d'alimentation autonomes (131) pour alimenter les différents circuits, en particulier le module de péage (D) qui lui est associé, dispose des moyens d'alimentation (BAT128) destinés à assurer la sauvegarde des données dans les circuits de mémoire et pour éventuellement alimenter les différents circuits internes.

31. Système selon l'une quelconque des revendications 1 à 30, caractérisé en ce que le module de péage (D) dispose des circuits de communication à distance incorporés dans le boîtier et que l'alimentation de l'ensemble est assurée par pile incorporée (BAT128) dans le boîtier du module de péage.

32. Système selon l'une quelconque des revendications 2 à 31, caractérisé en ce que le module de péage dispose des circuits électroniques de décisions programmés de manière à ce que ces circuits puissent interpréter différentes instructions qui lui sont transmises via le transmetteur et d'exécuter de manière autonome les opérations logiques et ou arithmétiques qui en résultent, en manipulant les données ou paramètres qu'il possède en mémoire.

33. Système selon l'une quelconque des revendications 29 à 32, caractérisé en ce que la programmation du module de péage consiste à lui injecter dans les mémoire (127, 129), en enfichant celui-ci dans un appareil programmateur destiné à cet effet, les divers paramètres à l'aide d'un jeu de télégrammes spécifiquement destinés à cet effet et comprenant : l'identité de la Société d'exploitation concernée, les codes d'accès, les listes de clefs d'encryptages en vigueur, le nombre de points mis en crédit et payés, etc..., toutes les données confidentielles correspondantes telles que: code d'identité, liste de clefs d'encryptages, codes d'accès, etc... sont sécurisées dans l'appareil programmateur, qui lui même est protégé.

34. Système selon l'une quelconque des revendications 2 à 33, caractérisé en ce que la partie transmetteur dispose quant à elle d'un code préprogrammé de sécurité et d'un code auxiliaire déterminant la catégorie du véhicules (120) : voiture de tourisme, camionnette, poid lourd, etc... , le module de péage tient compte de ces codes pour adapter la taxation ou le péage en fonction de la catégorie du véhicule et la classe d'utilisation et d'un code de la classification de l'usager: handicapé, police, militaire, etc..., le tarif applicable pour chaque catégorie ainsi que pour chaque classe étant donné dans le télégramme de l'interrogateur.

35. Système selon l'une quelconque des revendications 2 à 34, caractérisé en ce que les circuits de mémoires (127) destinées à conserver les données confidentielles dans le module de péage possèdent une protection qui empèche la relecture des données de quelque manière que ce soit, seul l'écriture ou la surimpression des données étant possible lors de l'initialisation ou programmation du module.

36. Système selon l'une quelconque des revendications 2 à 35, caractérisé en ce que le transpondeur (4) ou plus spécifiquement, le module de péage (D), dispose d'un circuit électronique de temporisation (ou par fonction programmée) permettant de détecter une activité ou sollicitation, sous forme de messages de demande de quelque nature qu'ils soient, anormalement élevée de manière à pouvoir détecter une tentative de percer les codes confidentiels du module de péage.

37. Système selon la revendication 29, caractérisé en ce que la fixation du boîtier du transmetteur (B) au véhicule est assurée de manière telle que toute tentative de démontage ou décollement ait pour conséquence soit de détruire physiquement l'appareil soit de le rendre inopérationnel, de manière à éviter de pouvoir déplacer le transmetteur sur un autre véhicule de catégorie différente, ou pour un autre usage que celui pour lequel le transmetteur avait été prévu.

38. Système selon la revendication 37, caractérisé en ce que mécaniquement, le transpondeur (4) lui-même est protégé contre toute agression physique, une telle agression résulterait en la destruction des circuits qu'il contient ou dans la mise hors service de l'équipement par effacement des mémoires (127, 129) quand l'on tente de le démonter du véhicule ou de le décortiquer.

39. Système selon l'une quelconque des revendications 1 à 38, caractérisé en ce que le transpondeur (4) et en particulier le module de péage (D) dispose des moyens permettant à l'usager d'introduire un code personnel secret pour activer le module de péage et de l'autoriser à fonctionner lorsqu'il est associé à un transmetteur (B), la désactivation pouvant se faire soit par le retrait du module de péage (D), soit par limite temporelle ou action manuelle.

40. Système selon l'une quelconque des revendications 2 à 39, caractérisé en ce que l' association d'un module de péage (D) et d'un transmetteur (B) peut être restreinte par la présence d'un code préprogrammé dans un circuit (fig. 10; 120) de la partie transmetteur, code qui est nécessaire au bon fonctionnement du module de péage (D), lorsqu'il est branché sur le transmetteur, le code du transmetteur ou des transmetteurs, avec le(s)quel(s) un module de péage a le droit de fonctionner, étant contenu dans une liste de codes conservée dans une mémoire du module de péage (D), lui permettant ainsi de valider l'association des deux parties.

41. Système selon la revendication 30 ou 31, caractérisé en ce que pour économiser l'énergie de la batterie d'alimentation du transpondeur (4) ou de celle contenue dans le module de péage (D), celui-ci possède un circuit de contrôle (107) permettant, entre autres, de maintenir en veille la plupart des circuits électroniques et donc de limiter la consommation à la conservation des mémoires de données dans le module de péage.

42. Système selon la revendication 41, caractérisé en ce que le circuit de réception du transpondeur (4) (partie transmetteur) est activé cycliquement pendant un court instant puis remis au repos, la disposition étant telle (Fig 12, 13) que le circuit de réception, s'il est dans une zône de capture d'un interrogateur (1), peut donner un signal au circuit de contrôle qui activera les circuits internes du module de péage (D), pour permettre l'analyse du message d'interrogation et en fonction du résultat de ce décodage, les circuits de réponse seront activés ou non.

43. Système suivant l'une quelconque des revendications 2 à 42, caractérisé en ce que la partie transmetteur (B) peut par ailleurs servir d'interface de réception pour d'autres appareils installés à bord des véhicules (2), pour autant que les signaux soient compatibles avec les circuits de réception.

**Patentansprüche**

1. Ein Taxierungssystem oder automatisches Gebühreneinzugssystem für Straßenfahrzeuge, das sich auf feste Abfragestationen (1) stützt, die sich über den Fahrspuren oder seitlich von diesen befinden, und auf Empfangs-/Antwortgeräte, die Transponder (4) genannt werden und die in den Straßenfahrzeugen (2) angebracht sind, ein System, bei dem jede feste Station (1) über eine Einheit zum senden und empfangen von Signalen verfügt, die in der Lage ist, einen ausreichenden Bereich in Richtung der ankommenden Straßenfahrzeuge abzudecken um mit den Transpondern (4) dieser Straßenfahrzeuge (2) zu kommunizieren, wobei jeder Transponder (4) über Möglichkeiten verfügt, die von den Abfragestationen (1) ausgesendeten Signale (5) zu empfangen und seinerseits Signale auszusenden, mit denen auf die Signale der Abfragestation geantwortet wird, außerdem enthält der Speicher des Transponders (4) auch Daten hinsichtlich der Währungsverhältnisse, die Einziehung der Straßenbenutzungsgebühren oder Steuern erfolgt automatisch und per Datenfernübertragung, sobald die Signale, die zwischen der Abfragestation (1) und dem in ihrer Reichweite befindlichen Transponder (4) ausgetauscht werden, verschiedene vorbestimmte Bedingungen erfüllen, sendet die feste Abfragestation kontinuierlich eine Nachricht aus, die ihre Anwesenheit signalisiert und die aus einem Telegramm (TS) besteht, das insbesondere eine Anweisung über die Erhebung einer Straßenbenutzungsgebühr enthält, während der Transponder (4), der im Straßenfahrzeug (2) angebracht ist, über die Möglichkeit verfügt, diese Anweisung, die durch das Abfragegerät erteilt wurde, auszuführen, insbesondere um die Zahlung der Straßenbenutzungsgebühr durchzuführen, indem von den restlichen Punkten, die sich im Speicher des Transponders befinden, eine bestimmte Anzahl Punkte in Höhe der Straßenbenutzungsgebühr abgezogen werden, dabei wird dafür gesorgt, daß jeder Transponder, der sich in der Reichweite (im Erfassungsbereich 3) des Abfragegerätes (1) befindet, das Telegramm empfängt, dessen Inhalt analysiert, und der (mobile) Transponder (4) sendet nur dann ein Quittierungstelegramm zurück, wenn die Anfrage akzeptiert und korrekt interpretiert wurde, es ist zum einen dadurch gekennzeichnet, daß das Telegramm (TS), das durch die feste Abfragestation an den Transponder gesendet wird, insbesondere einen Erkennungscode enthält, der für die feste Abfragestation (1) steht, um dem (mobilen) Transponder (4) zu gestatten, diese zu identifizieren, um die Durchführung von Gebührentransaktionen auf anonyme Weise zu gestatten, ohne daß notwendigerweise die Identität des Benutzers in den Daten, die zwischen dem Transponder (4) und der festen Abfragestation (1) übertragen werden, enthalten ist, und zum anderen dadurch, daß der Schutz der ausgetauschten Daten durch Verschlüsselungstechniken erfolgt, indem ein Schlüssel benutzt wird, der durch einen im Telegramm enthaltenen Code aus einer Liste von Schlüsseln, die in der festen Abfragestation und dem Transponder gespeichert ist, ausgewählt wird, der Schlüssel selbst bleibt dabei geheim.

2. Ein System gemäß Patentanspruch 1, das dadurch gekennzeichnet ist, daß der Transponder (4) aus zwei voneinander trennbaren Teilen besteht, wobei eines dieser Teile, das Sendegerät genannt wird (Abb. 16, B), im wesentlichen eine Fernübertragungseinheit sowie elektronische Schnittstellenleitungen umfaßt, und das andere Teil, das Gebührenmodul genannt wird (Abb. 16, D), über Speicherkreise verfügt, eine Zugriffschutzschaltung und Steuerstromkreise, insbesondere die elektronischen logischen Entscheidungskreise (durch Mikroprozessoren und benötigte Software), um intern die Funktionen durchzuführen, die ihm aus der Ferne in Form von auszuführenden Anweisungen aufgetragen werden, und das Protokoll des Dialogs mit dem Abfragegerät verwaltet sowie die Gesamtheit der als "intelligent" bezeichneten Operationen oder derer mit vertraulichem Charakter, die von ihm durchgeführt werden.

3. Ein System, gemäß irgendeinem der Patentansprüche 1 und 2, das dadurch gekennzeichnet ist, daß das Gebührenmodul (D) das Element darstellt, das die "Werte" beinhaltet und das einem Konto (bzw. Konten) entspricht, auf dem (denen) eine bestimmte Anzahl Punkte gutgeschrieben sind, die für einen Betrag stehen, der im voraus, bei der Validierung oder Initialisierung des Gebührenmoduls, durch den Benutzer eingezahlt wurde (vorsorgliche Zahlung oder per "Gutschriften"), die Anzahl der "Punkte" auf dem Konto des Moduls entspricht dem Restbetrag, mit dem die Gebühren für eine spätere Straßenbenutzung verrechnet werden können.

4. Ein System gemäß Patentanspruch 1 oder 2, das dadurch gekennzeichnet ist, daß das Gebührenmodul (D) das Element darstellt, das die "Werte" beinhaltet und das einem Konto (bzw. Konten) entspricht, das (die) eine Anzahl Punkte ansammelt (ansammeln), die für einen Kredit stehen, der dem Benutzer eingeräumt wurde, der sein Konto bei der Validierung oder Initialisierung des Gebührenmoduls ausgleicht (nachträgliche Zahlung), die Anzahl der "Punkte" auf dem Konto des Moduls entspricht der Gesamthöhe für noch zu zahlende Gebühren für vergangene Straßenbenutzungen.

5. Ein System gemäß Patentanspruch 1 oder 2, das dadurch gekennzeichnet ist, daß das Gebührenmodul (D) das Element darstellt, das die "Werte" beinhaltet und das im Speicher (127) über Daten hinsichtlich eines Bankkontos verfügt, die es gestatten, die Abfragestation über das Konto zu informieren, dem die Straßenbenutzungsgebühr oder Steuer angelastet werden soll.

6. Ein System gemäß irgendeinem der Patentansprüche 3 bis 5, das dadurch gekennzeichnet ist, daß die feste Abfragestation (1) die verschiedenen Zahlungsweisen akzeptieren kann und daß diese miteinander bestehen können, gleiches gilt für die Gebührenmodule (D), die der Benutzer je nach der Zahlungsweise, die er bevorzugt, auswählen kann.

7. Ein System gemäß irgendeinem der Patentansprüche 1 und 2, das dadurch gekennzeichnet ist, daß während der Anwesenheit eines Transponders (4) im Erfassungsbereich (3) einer festen Abfragestation (1) dieser Transponder (4) kontinuierlich durch ein Quittierungstelegramm (RS) auf jedes Abfragetelegramm (TS), das von der Abfragestation (1) empfangen wird, antwortet, insofern er die Abfragenachrichten als gültig anerkennt, um seine Anwesenheit in dem Bereich zu bestätigen.

8. Ein System, gemäß irgendeinem der Patentansprüche 1 bis 7, das dadurch gekennzeichnet ist, daß die Telegramme, die über die Ferne zwischen der festen Abfragestation (1) und dem mobilen Transponder (4) ausgetauscht werden, aus digitalisierten Daten bestehen, die als Stapel übertragen werden und sich eines Trägers von der Art elektromagnetischer Wellen oder einer anderen Art bedienen, um Betrug jeglicher Natur vorzubeugen, wird jedes übertragene Telegramm gesichert, was durch Verschlüsselungstechniken (beispielsweise nach dem DES-Standard) und durch Anwendung eines Schlüssels geschieht, der zur Störung der Daten bei der Übertragung dient, sowie eines Schlüssels (desselben oder eines anderen), der unbedingt erforderlich ist, um die Nachricht bei Empfang wiederherzustellen (zu entschlüsseln).

9. Ein System gemäß Patentanspruch 8, das dadurch gekennzeichnet ist, daß ein Teil der Daten des Abfragetelegrammes (TS) "in Klartext" (S1, S2) übertragen wird und dazu bestimmt ist, alle Transponder (4), die sich präsentieren, über die Identität (in Form eines stellvertretenden Codes) der Betreibergesellschaft, die die Abfragestation (1) benutzt, zu informieren; im Transponder (4) kann das Gebührenmodul (D) überprüfen, ob dieser ein "Abonnement oder ein offenes Konto" bei diesem Betreiber besitzt, wodurch sich dieser lediglich um die Nachrichten von Abfragegeräten zu kümmern braucht, die ihn betreffen.

10. Ein System gemäß irgendeinem der Patentansprüche 1 bis 9, das dadurch gekennzeichnet ist, daß das Gebührenmodul (D) zur Vermeidung einer doppelten oder mehrfachen Gebührenerhebung beim selben Straßenfahrzeug die Identität der letzten Abfragestation (1), der es geantwortet hat, speichert, wobei es eine erneute Durchführung der gleichen Transaktion ablehnt, indem es durch eine Nachricht antwortet, die quittiert: "bereits durchgeführt", das Straßenfahrzeug muß erst den Erfassungsbereich (3) verlassen, d.h., der Transponder (4) muß für einen bestimmten Zeitraum erst wieder in den Bereitschaftszustand übergehen, um die "Besteuerungsfähigkeit" derselben Abfragestation zu reaktivieren.

11. Ein System gemäß irgendeinem der Patentansprüche 2 bis 10, das dadurch gekennzeichnet ist, daß die Durchfahrt nur dann als zulässig anerkannt wird, wenn das Gebührenmodul (D) den Abfragebescheid (TS) quittiert hat, in allen anderen Fällen verzeichnet die feste Abfragestation (1) eine Unregelmäßigkeit und kann Maßnahmen wie die folgenden ergreifen: Verwarnung des Fahrers durch Signalübertragung oder Fotografieren des Straßenfahrzeugs, Videoaufzeichnung etc..., damit der Betreiber die Beitreibung der Gebühren entweder direkt vornehmen kann, oder den zuwiderhandelnden Benutzer für eine spätere Beitreibung identifizieren kann.

12. Ein System gemäß irgendeinem der Patentansprüche 2 bis 11, das dadurch gekennzeichnet ist, daß das Gebührenmodul eine Zusatzfunktion enthält, die in einem Speicher oder einer Speicherzone (127) besteht, der/die für diesen Zweck bestimmt ist und in dem/der die Daten über die verschiedenen durchgeführten Transaktionen hinsichtlich Straßenbenutzungsgebühr verzeichnet werden, die Aufzeichnung der Eigenschaften einer jeden Transaktion in den dazu vorgesehenen Speichern erfolgt automatisch im Gebührenmodul, die Anzahl der so gespeicherten Transaktionen hängt im wesentlichen von der Kapazität dieses Speichers ab, der möglicherweise eine zirkuläre Speicherstruktur besitzt (es werden z.B. die letzten 250 oder 500 Transaktionen aufgezeichnet), alle Daten bleiben entweder in einem permanentem Speicher oder durch die Versorgungszelle, die sich im Modul (BAT128) befindet, erhalten, so daß der Benutzer die Möglichkeit hat, die Liste der im Speicher seines Gebührenmoduls aufgezeichneten Transaktionen beispielsweise bei der Validierung in einer zugelassenen Geschäftsstelle ausdrucken zu lassen.

13. Ein System gemäß irgendeinem der Patentansprüche 1 bis 12, das dadurch gekennzeichnet ist, daß der Dialog zwischen der festen Abfragestation (1) und dem oder den Transponder(n) (4), der (die) sich im Erfassungsbereich (3) befindet (befinden), durch Zeitmultiplex zwischen den verschiedenen Transpondern (Abb. 5) erfolgt, indem jeder Verbindung mit einem mobilen Transponder eine Zeitspanne zugeteilt wird, die Steuerung dieser Funktion liegt beim Abfragegerät.

14. Ein System gemäß Patentanspruch 13, das dadurch gekennzeichnet ist, daß das Protokoll des Dialogs zwischen Abfragestation (1) und Transponder (4) einen Zyklusbegriff von konstanter (55) und repetitiver Dauer benutzt, und zu Beginn desselben sendet das Abfragegerät ein Abfragetelegramm (TS)(55) von fester Länge aus, dem eine Hörperiode von gleicher Dauer (54) folgt bzw. von einer Dauer, die leicht über einem Vielfachen der Zeit liegt, die der Sendung eines Antworttelegramms (Abb. 5, F₁-Fₙ) zugeteilt wurde, das ebenfalls eine fester Länge hat und das von einem mobilen Transponder (4) ausgehen kann, der erst antworten kann, wenn der Empfang des Abfragetelegramms (51) auf seiner Ebene abgeschlossen ist und nur innerhalb einer maximalen Frist von einer vielfachen Anzahl von Malen minus eins der Dauer, die der Übertragung eines Antworttelegramms (57) zugeteilt wurde, die vielfache Anzahl ist hierbei für alle Abfragestationen (1) und Transponder (4) für die gegebene Anwendung festgelegt.

15. Ein System gemäß irgendeinem der Patentansprüche 13 oder 14, das dadurch gekennzeichnet ist, daß der Transponder (4) über einen Zufallszahlengenerator bzw. einen Pseudo-Zufallszahlengenerator verfügt, der bei jedem Abfragezyklus eine mehr oder weniger starke zeitliche Verschiebung des Zeitpunkts der Antwort des Transponders gestattet, die Verschiebung erfolgt um Zeitspannen, die ebensolang sind wie bzw. etwas länger als die Dauer, die der Übertragung einer Antwort zugeteilt wurde, dadurch werden die Antworten (Ra, Rb, Rc) etwaiger anderer Transponder (4), die sich in unmittelbarer Umgebung der Abfragestation (1) befinden, statistisch auf die Zeit verteilt, die ein und derselben Hörperiode einer Abfragestation (1) zugeteilt wurde, somit wird verhindert, daß sich die Antworten systematisch stören (Abb. 6).

16. Ein System gemäß irgendeinem der Patentansprüche 1 bis 15, das durch eine Vorrichtung gekennzeichnet ist, die es gestattet, die Abfragegeräte (1) derselben Gebührenerhebungsstelle zu synchronisieren (zumindest für ein und dieselbe Verkehrsrichtung), so daß jedes von ihnen Abfragezyklen erzeugt, die mit den benachbarten Abfragegeräten synchronisiert sind.

17. Ein System gemäß irgendeinem der Patentansprüche 1 bis 16, das durch die Möglichkeit gekennzeichnet ist, für jede Fahrspur einen doppelten Erfassungsstrahl zu erzeugen, der im wesentlichen auf einer horizontalen Ebene versetzt ist und somit für die eintretenden Straßenfahrzeuge einen doppelten Erfassungsbereich (Abb. 14) schafft, ebenso sind Möglichkeiten vorgesehen, um alternativ, auf synchrone Weise, entweder den einen oder den anderen Strahl zu aktivieren.

18. Ein System gemäß irgendeinem der Patentansprüche 1 bis 17, das dadurch gekennzeichnet ist, daß die Abfragegeräte, die in einer Gebühren- bzw. Steuererhebungsstelle installiert sind, mit einer Datenverarbeitungszentrale (Ct) verbunden sind, alle durchgeführten Transaktionen können somit zu Verwaltungszwecken (Rechnungswesen, Statistiken usw...) weiterverarbeitet werden, diese Zentrale (Ct) kann ebenso die Synchronisierungsfunktionen der Abfragegeräte (1) gewährleisten und eventuell im Falle von Gebührenhinterziehung über die Ergreifung von Maßnahmen, wie z.B. Fotografieren oder Videoaufzeichnung etc..., entscheiden.

19. Ein System gemäß Patentanspruch 8, das durch eine Vorrichtung gekennzeichnet ist, die es gestattet, einen Verschlüsselungscode aus einer Liste von Verschlüsselungscodes auszuwählen, so daß die vertraulichen Daten, die im übertragenen Telegramm enthalten sind, mittels eines Schlüssels codiert werden, der aus einer Liste verschiedener Schlüssel, einer Liste, die in diesem Moment gerade angewandt wird, ausgewählt wurde, eine ähnliche Liste wird in jedem Gebührenmodul (D) gespeichert, wo sie bei der Initialisierung oder Validierung des Moduls für diesen Betreiber einprogrammiert wurde, das Telegramm enthält einen Code "in Klartext" (S2), der die laufende Nummer des aus der Liste anzuwendenden Schlüssels angibt, mit dem die restlichen Daten entschlüsselt werden können, wobei der Schlüssel selbst geheim bleibt.

20. Ein System gemäß irgendeinem der Patentansprüche 1 bis 19, das dadurch gekennzeichnet ist, daß das Abfragegerät (1) im geeigneten vertraulichen und verschlüsselten Bereich (S3, S4) seines Abfragetelegramms (TS) den stellvertretenden Code der vorzunehmenden Anweisung (Art der Transaktion) sowie ein Register mit Daten, die sich auf diese Anweisung beziehen, überträgt, diese Daten sind beispielsweise: auf verschiedene Fahrzeugkategorien anzuwendende Tarife, Ort der festen Abfragestation etc... oder eine Kombination dieser Daten, die Interpretation und die Verarbeitung der Daten entsprechend der erhaltenen Anweisung obliegt gänzlich dem Prozessor des Gebührenmoduls, der unter Berücksichtigung der Parameter oder Daten, die sich in seinem Speicher befinden, allein über die Zulässigkeit oder die Stattgebung der Transaktionsanfrage entscheidet.

21. Ein System gemäß irgendeinem der Patentansprüche 8 bis 20, das dadurch gekennzeichnet ist, daß gewisse Daten im vertraulichen Bereich (S4) eines Abfragetelegramms (TS), das von einem Abfragegerät (1) ausgesandt wird, bei jedem Sendezyklus wechseln.

22. Ein System gemäß irgendeinem der Patentansprüche 8 bis 21, das dadurch gekennzeichnet ist, daß das Abfragegerät (1) über einen Zufallszahlengenerator oder Pseudo-Zufallszahlengenerator verfügt, der es gestattet, Abfragetelegramme (TS) mit identischer Bedeutung zu erstellen, deren binärer Inhalt jedoch bei jedem Zyklus - trotz der Verschlüsselung - ein anderer ist.

23. Ein System gemäß irgendeinem der Patentansprüche 8 bis 22, das dadurch gekennzeichnet ist, daß das Abfragegerät (1) über eine Vorrichtung (83) verfügt, die es gestattet, ein moduliertes Signal zu erzeugen, das über die digitalen Informationen hinaus auch eine Uhrenkomponente beinhaltet, die die Geschwindigkeit der übertragenen Bits angibt.

24. Ein System gemäß Patentanspruch 23, das dadurch gekennzeichnet ist, daß die Analyse und die Überprüfung der Existenz einer gegebenen zusätzlichen frequentiellen Komponente (Abb. 11) (Uhrenkomponente) (X3) in dem Modulationssignal, das auf der Ebene der Empfangskreise (X1) des Transponders aufgenommen wurde, es diesem gestattet, die Präsenz einer festen Abfragestation zu bestimmen.

25. Ein System gemäß irgendeinem der Patentansprüche 8 bis 24, das dadurch gekennzeichnet ist, daß die Modulation (Abb. 10; 118) der Antwortsignale des Transponders, die an die Abfragestation gesendet werden, durch die Modulation der Energie der reinen Trägerfrequenz erfolgt, die durch das Abfragegerät (1) während dessen Hörperiode ausgesendet wird, so wie sie auf der Ebene des Transponders empfangen wird und um einen Teil der Energie der eintretenden Trägerfrequenz mit gleicher Frequenz zu reflektieren, und indem ihm eine Modulationskomponente vom Typ Amplitudenmodulation hinzugefügt wird, die die charakteristischen Elemente der Antwortnachricht enthält (Abb. 10; 130).

26. Ein System gemäß Patentanspruch 25, das dadurch gekennzeichnet ist, daß der Energiemodulator (Abb. 10; 118) des Transponders die Eigenschaften eines Modulators vom Typ BLU (Einseitenband) aufweist und daß das Abfragegerät (1) mit einem Empfänger für Signale reflektierter Energie (84) (amplitudenmoduliert) versehen ist, dieser Empfänger ist so ausgestattet, daß die Erfassung unabhängig von der Phasenabweichung des Signals, das vom in Bewegung stehenden Transponder reflektiert wird, erfolgen kann.

27. Ein System gemäß Patentanspruch 25 oder 26, das dadurch gekennzeichnet ist, daß der Modulator der digitalen Daten (Abb. 10; 117) des Transponders ein Frequenzmodulator ist.

28. Ein System gemäß irgendeinem der Patentansprüche 25 bis 27, das dadurch gekennzeichnet ist, daß der Transponder über einen Modulationskreis (118) verfügt, der die Eigenschaft benutzt, die eine Diode vom Typ Varicap oder Varactor besitzt, eine Eigenschaft, die eine Veränderung der Kapazität des Übergangs des Halbleiters in Abhängigkeit von der Spannung beinhaltet, die auf dessen Klemmen angewandt wird, dieser Kreis gestattet die Erzeugung der Amplitudenmodulation einer Trägerfrequenz durch die Absorption der Energie des Signals dieser Trägerfrequenz, indem eine Übertragungsleitung auf kontrollierte Weise - durch die Präsenz der variablen Kapazität der Varicapdiode an einer bestimmten Stelle dieser Leitung - fehlangepaßt wird, beim Austritt der zurückbleibende Energie der Trägerfrequenz aus diesem Modulator ergibt sich eine Trägerfrequenz, die mit der einfallenden Trägerfrequenz identisch ist, jedoch mit einer Amplitudenmodulationskomponente, die die Eigenschaften des Modulationssignals (130) besitzt, das auf die Klemmen der Varicapdiode bzw. der Varicapdioden angewandt wird.

29. Ein System gemäß irgendeinem der Patentansprüche 2 bis 28, das dadurch gekennzeichnet ist, daß sich der Transponder (4) aus zwei Teilen zusammensetzt, einerseits aus dem Sendegerät (Abb. 16, B), das im Straßenfahrzeug angebracht werden soll, und andererseits aus dem Gebührenmodul (D), die Verbindung der beiden Teile erfolgt auf der Ebene des Verbindungsstücks (C), das mit elektrischen Klemmkontakten versehen ist, die beiden Elemente des Verbindungsstücks sind jeweils Teil des Sendegerätgehäuses, indem sie als Halterung dienen, in die das Gebührenmodul eingefügt wird, die Aktivierung oder die Versorgung des Ganzen wird automatisch gewährleistet, wenn die beiden Teile zusammengeschlossen werden.

30. Ein System gemäß irgendeinem der Patentansprüche 2 bis 29, das dadurch gekennzeichnet ist, daß das Transpondergerät (4) mit netzunabhängigen Versorgungsmöglichkeiten (131) ausgestattet ist, mit denen die verschiedenen Kreise versorgt werden, insbesondere das Gebührenmodul (D), das mit ihm verbunden ist, verfügt über Versorgungsmöglichkeiten (BAT 128), die zur Sicherstellung des Schutzes der Daten in den Speicherkreisen und gegebenenfalls zur Versorgung der internen Kreise bestimmt ist.

31. Ein System gemäß irgendeinem der Patentansprüche 1 bis 30, das dadurch gekennzeichnet ist, daß das Gebührenmodul (D) über Fernverbindungskreise verfügt, die sich im Gehäuse befinden, und daß die Versorgung des Ganzen durch eine Batterie (BAT 12Z) gewährleistet wird, die sich im Gehäuse des Gebührenmoduls befindet.

32. Ein System gemäß irgendeinem der Patentansprüche 2 bis 31, das dadurch gekennzeichnet ist, daß das Gebührenmodul über elektronische Entscheidungskreise verfügt, die derart programmiert sind, daß diese Kreise in der Lage sind, verschiedene Anweisungen zu interpretieren, die ihm per Sendegerät übertragen werden, und selbständig die funktionellen und/oder arithmetischen Operationen durchzuführen, die sich dabei ergeben, indem die Daten oder Parameter, die sich in seinem Speicher befinden, verarbeitet werden.

33. Ein System gemäß irgendeinem der Patentansprüche 29 bis 32, das dadurch gekennzeichnet ist, daß die Programmierung des Gebührenmoduls darin besteht, daß in seine Speicher (127, 129) die verschiedenen Parameter eingegeben werden, indem es in ein zu diesem Zweck vorgesehenes Programmiergerät gesteckt wird, die Eingabe erfolgt mit Hilfe einer Reihe von Telegrammen, die speziell zu diesem Zweck vorgesehen wurden und die folgendes beinhalten: die Identität der betroffenen Betreibergesellschaft, die Zugangscodes, die Liste der geltenden Verschlüsselungscodes, die Anzahl der gutgeschriebenen und bezahlten Punkte etc..., alle entsprechenden vertraulichen Daten, wie Identitätscode, Liste der Verschlüsselungscodes, Zugangscodes etc..., sind im Programmiergerät, das seinerseits geschützt ist, gesichert.

34. Ein System gemäß irgendeinem der Patentansprüche 2 bis 33, das dadurch gekennzeichnet ist, daß das Sendeteil seinerseits über einen vorprogrammierten Sicherheitscode und einen Zusatzcode verfügt, der die Kategorie des Straßenfahrzeugs (120) festlegt: Personenkraftwagen, Kleinlastwagen, Schwerlastwagen etc... das Gebührenmodul berücksichtigt diese Codes, um die Besteuerung oder die Gebühr entsprechend der Kategorie und der Benutzerklasse des Straßenfahrzeugs sowie eines Einstufungscodes für den Benutzer anzupassen: Behinderter, Polizist, Militärdienstleistender usw... der Tarif, der auf die jeweilige Kategorie sowie auf die jeweilige Klasse anzuwenden ist, ist im Telegramm des Abfragegerätes enthalten.

35. Ein System gemäß irgendeinem der Patentansprüche 2 bis 34, das dadurch gekennzeichnet ist, daß die Speicherkreise (127), die für die Aufbewahrung der vertraulichen Daten im Gebührenmodul bestimmt sind, einen Schutz besitzen, der ein erneutes Lesen der Daten, gleich auf welche Weise, verhindert, allein die Eintragung oder Überschreibung der Daten ist bei der Initialisierung oder Programmierung des Moduls möglich.

36. Ein System gemäß irgendeinem der Patentansprüche 2 bis 35, das dadurch gekennzeichnet ist, daß der Transponder (4) oder, genauer gesagt, das Gebührenmodul (D) über einen elektronischen Verzögerungskreis verfügt (oder durch programmierte Funktion), der es gestattet, eine Aktivität oder Spannung - in Form von Anfragenachrichten gleich welcher Art - die ungewöhnlich hoch ist, ausfindig zu machen, um einen Versuch, die vertraulichen Codes des Gebührenmoduls zu entschlüsseln, aufspüren zu können.

37. Ein System gemäß Patentanspruch 29, das dadurch gekennzeichnet ist, daß die Anbringung des Gehäuses des Sendegeräts (B) am Straßenfahrzeug derart vorgenommen wird, daß jeglicher Versuch, es auszubauen oder abzulösen, entweder die physische Zerstörung des Apparates zur Folge hätte oder aber dessen Betrieb unmöglich machen würde, um zu vermeiden, daß das Sendegerät ausgebaut und in einem Fahrzeug einer anderen Kategorie angebracht werden kann oder daß es für einen Zweck benutzt wird, für den es nicht vorgesehen ist.

38. Ein System gemäß Patentanspruch 37, das dadurch gekennzeichnet ist, daß der Transponder (4) selbst auf mechanische Weise gegen jegliche physische Gewalt geschützt ist, eine derartige Gewaltanwendung würde zur Zerstörung der Stromkreise, die er enthält, führen oder würde das Gerät durch Löschen der Speicher (127, 129) außer Betrieb setzen, wenn man versuchte, es aus dem Straßenfahrzeug auszubauen oder aus dem Gehäuse zu nehmen.

39. Ein System gemäß irgendeinem der Patentansprüche 1 bis 38, das dadurch gekennzeichnet ist, daß der Transponder (4) und insbesondere das Gebührenmodul (D) über Möglichkeiten verfügt, die es dem Benutzer gestatten, einen persönlichen Geheimcode einzugeben, um das Gebührenmodul zu aktivieren und dessen Betrieb zu autorisieren, wenn es mit einem Sendegerät (B) verbunden ist, das Ausschalten kann sowohl durch Entfernen des Gebührenmoduls als auch durch zeitliche Begrenzung oder Handbedienung erfolgen.

40. Ein System gemäß irgendeinem der Patentansprüche 2 bis 39, das dadurch gekennzeichnet ist, daß die Verbindung eines Gebührenmoduls (D) und eines Sendegerätes (B) durch einen vorprogrammierten Code in einem Kreis (Abb. 10; 120) des Sendeteils eingeschränkt werden kann, dieser Code ist für den einwandfreien Betrieb des Gebührenmoduls (D) unerläßlich, wenn es an das Sendegerät angeschlossen wird, der Code des Sendegerätes oder der Sendegeräte, mit dem bzw. mit denen sich ein Gebührenmodul in Betrieb setzen darf, ist in einem Codeverzeichnis eingetragen, das in einem Speicher des Gebührenmoduls (D) aufbewahrt wird, wodurch es in der Lage ist, die Verbindung der beiden Teile als gültig anzuerkennen.

41. Ein System gemäß Patentanspruch 30 oder 31, das dadurch gekennzeichnet ist, daß das Gebührenmodul (D) zur Einsparung der Energie der Versorgungsbatterie des Transponders (4) oder seiner eigenen Batterien, einen Steuerstromkreis besitzt (107), der es unter anderem ermöglicht, den größten Teil der elektronischen Kreise in Bereitschaftbetrieb zu halten und folglich den Verbrauch beim Erhalt der Datenspeicher im Gebührenmodul einzuschränken.

42. Ein System gemäß Patentanspruch 41, das dadurch gekennzeichnet ist, daß der Empfangskreis des Transponders (4) (Sendeteil) auf zyklische Weise für einen kurzen Augenblick aktiviert und dann wieder in Ruhestellung versetzt wird, die Einstellung besitzt dabei die Eigenschaft (Abb. 12, 13), daß der Empfangskreis, wenn er sich in einem Erfassungsbereich eines Abfragegerätes (1) befindet, ein Signal an den Steuerstromkreis geben kann, das die inneren Stromkreise des Gebührenmoduls (D) aktiviert, um die Analyse der Abfragenachricht zu ermöglichen, und entsprechend dem Ergebnis dieser Dekodierung werden die Antwortkreise aktiviert oder bleiben in Ruhestellung.

43. Ein System gemäß irgendeinem der Patentansprüche 2 bis 42, das dadurch gekennzeichnet ist, daß das Sendeteil (B) überdies als Empfangsschnittstelle für weitere Geräte dienen kann, die in den Straßenfahrzeugen (2) installiert sind, insofern die Signale mit den Empfangskreisen kompatibel sind.

## Claims

1. Taxing or automatic toll system for road vehicles making use of fixed interrogation units (1) located above or alongside traffic lanes, together with receiving/answering equipment termed transponders (4) installed on vehicles (2), a system in which each fixed unit (1) comprises an emission and a reception installation for signals capable of covering an area in the direction of oncoming vehicles, adequate to permit interrogation of and communication with the transponders (4) of those vehicles (2), each transponder (4) comprising the means for the reception of the signals (5) emitted by the interrogation units (1) and for the emission of signals responding to the signals of the interrogation units, the transponder (4) also containing a memory for the data relating to monetary values, the collection of the passage dues or taxes being deducted automatically and remotely by teletransmission, when the signals exchanged between the interrogation units (1) and the transponder (4) within its range comply with certain predetermined conditions, the fixed interrogating unit (1) emits continually a message signalling, on the one hand, its presence, which consists of a message (TS) containing in particular an instruction demanding the collection of toll, whereas the transponder (4) installed on the vehicle (2) comprises the means for executing the instruction issued by the interrogator, in particular for effecting the payment of the toll by deducting, from the balance of points contained in the memory of the transponder, the number of points equivalent to the payment due, the disposition being such that any transponder situated in the range (reception area 3) of the interrogator (1) receives the message, analyses its contents and the (mobile) transponder (4) then sends back a receipt message only if the demand is accepted and correctly interpreted, characterised in that the message (TS), emitted by the interrogator toward the transponder, contains in particular a representative identification code of the fixed toll unit (1), in order to enable the (mobile) transponder (4) to identify it, so as to be able to effect toll transactions anonymously, without the user's identity being necessarily disclosed in the data transmitted between the transponder (4) and the fixed interrogator unit (1), and such that the security of the data exchanged is assured by means of encryption by a encryption key selected, with a code number included in the message, from a list of keys memorised in the fixed interrogation unit and in the transponder, the key itself remaining secret.

2. A system according to claim 1, characterised by the fact that the transponder equipment (4) is constituted of two separable parts, one of which, termed the transmitter (Fig. 16, B) comprises essentially a teletransmission unit and electronic interface circuits, and the other, termed the toll module (Fig. 16, D), contains memory circuits, as well as access protection and supervisory circuits, in particular, the electronic logic decision circuits (microprocessor and necessary software) for carrying out, internally, the functions demanded of it, in the form of instructions to execute and to manage the protocol with the interrogating equipment, the whole of the so-called "intelligent" or confidential operations being executed by it.

3. A system according to either of claims 1 and 2, characterised by the fact that the toll module (D) constitutes the element carrying the "values", equivalent to a credit account (or accounts) of a number of points representing the amount paid in by the user in anticipation (payment by voucher or on account), at the time of the validation or initiation of the toll module, the number of "points" on the account of the module represents the balance remaining as provision for future toll transactions.

4. A system according to claim 1 or 2, characterised by the toll module (D) constituting the carrier element of the "values", equivalent of an account (or accounts) accumulating a number of points representing credit granted to a user who settles his account (payment a posteriori), at the time of the validation or initiation of the toll module, the number of "points" on the account in the module represents the total of the dues to be paid for the past toll transactions.

5. A system according to claim 1 or 2, characterised by the toll module (D), constitutes carrier element of "values" which is equipped with a memory (27) of the data relating to A Bank account rendering it possible to inform the interrogation unit of the account to be debited for the payment of the toll dues or tax.

6. A system according to one or another of claims 3 to 5, characterised by the fact that the fixed unit (1) can accept the different types of payments modes and that these can co-exist, the same for the toll modules (D) that may be chosen by the user according to the method of payment which he prefers.

7. A system according to either of claim 1 and 2, characterised by the fact that during the presence of a transponder (4) in the capture area (3) of a fixed interrogator unit (1), that transponder (4) will reply continually by a receipt message (RS) to each request message (TS) received from the interrogator (1), in as far as it validates those request messages, in a manner to confirm its presence in the zone.

8. A system according to any one claim from 1 to 7, characterised by the remotely exchanged messages between the fixed interrogation unit (1) and the mobile transponder (4) consist of digitalized data, transmitted in packets and utilising a transmission support of the electromagnetic-wave type or other, each message transmitted being secured, to guard against frauds of any nature, by the encrypting technique (according to the DES standard, for example) requiring a key code which is used for scrambling the data at the emission and a key (the same or another) which is indis-pensable for reconstituting (decrypting) the message at the reception.

9. A system according to claim 8, characterised by the fact that part of the data of the demand message (TS) is transmitted "plain" (S1, S2) and is destined to inform all the transponders (4) of the identity (in the form of a representative code) of the operating company which uses the interrogating unit (1); in the transponder (4), the toll module (D) can verify whether this possesses a "subscription or open account" for that exploiter, which enables him to preoccupy himself only with the interrogators' messages concerning him.

10. A system according to any one of claims 1 to 9 characterised by the fact that, in order to avoid double or multiple taxation of the same vehicle, the toll module (D) memorises the identity of the last interrogating unit (1) to which it has replied, refusing to execute again the same transaction by responding with a receipt message with the wording "already executed", the vehicle having to leave the capture area (3), that is to say, that the transponder (4) must repass in a standby mode for a certain time, in order to reactivate the "taxability" of the same fixed toll unit.

11. A system according to any one of claims 2 to 10, characterised by the fact that the passage is admitted as being valid only if the toll module (D) has acquitted the demand instruction (TS), in all other cases, the fixed unit (1) notices an irregularity and can take enforcement actions such as: warning the driver by signalling or taking a photograph of the vehicle, video recording etc..., so that the exploiter can either resort to manual perception or identify the offending user for ulterior recourse.

12. A system according to any one of claims 2 to 11, characterised by the fact that the toll module (D) contains a complementary function, which consists of a memory or a zone of memory (127), reserved for that effect and in which the history of the various tool transactions carried out is itemised, the recording of the characteristics of each transaction in the memories destined to that effect, take place automatically in the toll module, the number of transactions thus memorised essentially depends on the capacity of that memory, which may have a circular memory structure (for example, 250 or 500 last transactions recorded) all the data are protected either in a memory of the non-volatile type, or by the feeder battery incorporated in the module (BAT 126), to such an extent that the user has the possibility, during a validation operation in an authorised office, for example, to request the printing of the list of transactions recorded in the memory of its toll module.

13. A system according to any one of claims 1 to 12, characterised by the fact that the dialogue between the fixed interrogation unit (1) and the transponder(s) (4) present in the capture zone (3) occurs by multiplexing in time between the different transponders (Fig. 5), by the allotment of a slice of time to the communication with each of the mobile transponders, the management of that function being effected by the interrogator.

14. A system according to claim 13, characterised by the fact that the protocol of the dialogue, between the interrogation unit (1) and the transponder (4), makes use of a cycle of constant (55) duration and repetitive and at the start of which the interrogator emits a demand (TS) message (55) of fixed length, followed by a listening period of equivalent length (54) or slightly greater than a multiple of the time assigned for sending a reply message (Fig. 5, F1-F4) likewise of fixed length, being able to originate from a mobile transponder (4), which can reply only after the end of the reception at its level, of the demand message (51) and within a delay of not more than a multiple number of times less one, of the time assigned for the transmission of a reply message (57), the multiple number being determined and fixed for all interrogators (1) as well as transponders (4) for the application given.

15. A system according to either claim 13 or 14, characterised by the fact that the transponder (4) includes a generator of random or pseudo-random numbers permitting, in each interrogation cycle, to shift more or less in time, shifting by time slices equal to or slightly greater than the time allotted to the transmission of a reply message, the moment of the reply to the transponder in a manner to allot statistically in the time allocated to a same listening period of an interrogator (1), the replies (Ra, Rb, Rc) of possible other transponders (4) present in the area around the interrogator (1) and to ensure in that way that the reply messages cannot scramble themselves systematically (Fig. 6).

16. A system according to any one of claims 1 to 15, characterised by the presence of a device for synchronising the interrogator (1) of a same toll unit (at least for a same direction of the traffic) in a manner such that each of them generates demand cycles synchronised with the neighbouring interrogators.

17. A system according to any one of claims 1 to 16, characterised by the means permitting the creation for each traffic lane of a double detection beam essentially shifted on a horizontal plane, thus creating a double zone of capture (Fig. 14) for the vehicles entering, the means are also provided for activating alternatively, in a synchronous manner, one or the other beam.

18. A system according to which any one of the claims 1 to 17, characterised by the fact that the interrogating equipments installed at a toll or taxation unit, are connected to a central data-processing (Ct) unit, all the transactions effected can thus be treated for the purposes of management (accounting, statistics etc...), that central unit (Ct) being able also to assure the functions of synchronisation of the interrogation equipments (1) and, possibly, decide to put into effect the actions of recourse in the case of fraud, such as the taking of photographs or video recordings etc...

19. A system according to claim 8, characterised by a device permitting the selection of an encryption key from among a list of keys, so that the confidential data in the messages transmitted are encrypted by means of a key selected from among a list of different keys, which list of keys applies at that time, a similar list is memorised in each toll module (D) and programmed at the time of the initiation or validation of the module for that exploiter, the message containing a "plain" (52) code which indicates the serial number of the key to be used in the list for decrypting the remainder of the data, the key itself remaining secret.

20. A system according to any one of claims 1 to 19, characterised as to whether the interrogator (1) transmits in the effective, confidential and encrypted (S3, S4) part of its request message (TS), the code representing the instruction (type of transaction) to be effected and a table of data relative to that command, those data are, for example, tariffs applicable by categories of vehicles, location of the fixed post etc... or a combination of those data, the interpretation and the data-processing, in function of the command received, is incumbent entirely on the processor of the toll module which alone decides, as a function of the parameters or data which it has in memory, on the acceptability or on the follow-up of the request for transaction.

21. A system according to any one of claims 8 to 20, characterised by certain data in the confidential part (54) of a demand message (TS) emanating from an interrogator (1), changing with every emission cycle.

22. A system according to any one of claims 8 to 21, characterised by the interrogator's (1) disposing of a generator of random or pseudo-random numbers, rendering it possible to create demand messages (TS) of identical significance, although the binary content of which differs at each cycle, despite the encrypting.

23. A system according to any one of claims 8 to 22, characterised by the interrogator's (1) possessing a device (23) permitting the generation of a modulated signal which comprises, in addition to the digital information, a clock component representing the rhythm of the bits transmitted.

24. A system according to claim 23, characterised in that the analysis and the verification of the existence of an auxiliary frequency component given (Fig. 11) (clock component) (X3) in the modulation signal received at the level of the reception circuits (X1) of the transponder, enables this to determine the presence of a fixed interrogator.

25. A system according to any one of claims 9 to 24, characterised by the modulation (Fig. 10; 118) of the reply signals of the transponder toward the interrogating unit occurring by the modulation of the signal of the pure carrier-frequency emitted by the interrogator (1) during its listening period, such as received at the level of the transponder and in a manner such as to reflect a part of the energy of the incidental carrier, at the same frequency, and by adding to it a modulation component of the amplitude modulation type containing the characteristic elements of the reply message (Fig. 10; 130).

26. A system according to claim 25, characterised in that the energy modulation (Fig. 10; 118) of the transponder presents the characteristics of a modulator of the SSB (single-sideband) type and that the interrogator (1) is equipped with a reflected-energy receiver (34) (amplitude modulated), which receiver is equipped so as to permit the detection to be effected independently of the phase shift of the signal reflected by the transponder in movement.

27. A system according to claims 25 or 26, characterised by the digital data modulator (Fig. 10; 117) of the transponder being a frequency modulator.

28. A system according to any one of the claims 25 to 27, characterised by the transponder's possessing a modulation circuit (118) making use of the characteristic of a diode of the varicap or varactor type, a characteristic which comprises a variation of the junction capacitance of the semiconductor as a function of the voltage applied at its terminals, a circuit which permits generating the modulation of the amplitude type of a carrier frequency by the absorption of the energy of the signal of that carrier by mismatching a transmission line, in a manner controlled by the presence of the variable capacitance of the varicap diode in a determined place on that line, the residual energy of the carrier at the output of that modulator comprises a carrier frequency identical to the incident carrier, but with an amplitude modulation component possessing the characteristics of the modulation signal (130) applied to the terminals of the varicap diode(s).

29. A system according to any one of claims 2 to 28, characterised in that the transponder (4) is composed of two parts, on the one hand, the transmitter (Fig. 16, B) destined to be mounted on the vehicle and, on the other hand, the toll module (D), the two parts being connected at the level of the connector (C) comprising the terminals of electric contacts, the two elements of the connector respectively forming parts of the transmitter casing and acting as receptacle for inserting the toll module, the activation or the alimentation of the whole is automatically assured when associating the two parts.

30. A system according to any one of the claims 2 to 29, characterised by the transponder (4) equipment being equipped with autonomous (151) power supply means for feeding the different circuits, in particular, the toll module (D) which is associated with it, includes power supply means (BAT 128) destined to assure safeguarding the data in the memory circuits and, if necessary, for feeding the different internal circuits.

31. A system according to any one of claims 1 to 30, characterised by the toll module (D) disposing of telecommunication circuits incorporated in the casing and by the power supply of the whole being assured by a battery incorporated (BAT 128) in the casing of the toll module.

32. A system according to any one of claims 2 to 31, characterised by the toll module including electronic circuits of decisions programmed in such a manner that those circuits can interpret different instructions transmitted to them via the transmitter and execute autonomously the logic and/or arithmetic operations arising therefrom, by manipulating the data or parameters which it possesses in its memory.

33. A system according to any one of claims 29 to 32, characterised by the programming of the toll module consisting of injecting into its memories (127, 129) by inserting it in programming equipment intended for that purpose, the various parameters by means of a series of messages specifically intended for that effect and comprising: the identity of the exploiting Company concerned, the access codes, the lists of encrypting keys in force, the number of points credited and paid etc., all the corresponding confidential data such as: identity code, list of encrypting keys, access codes etc, being secured in the programming equipment which itself is protected.

34. A system according to any one of claims 2 to 33, characterised by the transmitter part itself disposing of a preprogrammed security code and of an auxiliary code determining the category of the vehicle (120): touring vehicle, van, heavy lorry etc..., the toll module takes account of those codes for adapting the taxation or the toll as a function of the category of the vehicle and the utilisation class and a code of the classification of the user: handicapped, police, military etc..., the tariff applicable for each category as well as for each class being given in the telegram of the interrogator.

35. A system according to any one of claims 2 to 34, characterised by the memory circuits (127) destined to conserve the confidential data in the toll module possessing a protection which prevents the re-reading of the data in any manner whatsoever, only the writing or the overwriting of data being possible at the time of initiation or programming of the module.

36. A system according to any one of claims 2 to 35 characterised by the transponder (4) or more specifically, the toll module (D) disposing of an electronic temporisation circuit (or by programmed function) permitting the detection of an activity of commands in the form of messages of any nature whatsoever, abnormally high in a manner of being able to detect a tentative of breaking the confidential codes of the toll module.

37. A system according to claim 29, characterised by the attachment of the transmitter casing (B) to the vehicle being effected in such a manner that any attempt to dismantle or loosen it would have as a consequence either the physical destruction of the apparatus or its being rendered inoperational, in a manner such as to avoid the possibility of placing the transmitter on another vehicle of a different category, or for another use than that for which the transmitter had been intended.

38. A system according to claim 37, characterised in that mechanically, the transponder (4) itself is protected against any physical aggression, such aggression would result in the destruction of the circuits which it contains or in putting the equipment out of service by clearing the memories (127, 129) when one attempts to remove it from the vehicle or to dismantle it.

39. A system according to any one of claims 1 to 38, characterised by the fact that the transponder (4) and, in particular, the toll module (D) disposes of means permitting the user to introduce a secret personal code for activating the toll module and to authorise it to function when it is associated with a transmitter (B), the disactivation could occur either by removing the toll module or by time limit or manual action.

40. A system according to any one of claims 2 to 39, characterised in that the association of a toll module (D) and a transmitter (B) can be restrained by the presence of a pre-programmed code in a circuit (Fig. 10; 120) of the transmitter part, a code which is necessary for the good functioning of a toll module (D), when it is connected to the transmitter, the code of the transmitter or transmitters, with which a toll module has the right to function, being contained in a list of codes conserved in a memory of the toll module (D), thus permitting it to validate the association of the two parts.

41. A system according to claims 30 or 31, characterised in that, in order to economise the energy of the feeder battery of the transponder (4) or of that contained in the toll module (D), this possesses a control circuit (107) permitting, among other things, the maintenance on standby of the majority of the electronic circuits and thus to limit the consumption to that of the memories of data in the toll module.

42. A system according to claim 41, characterised in that the reception circuit of the transponder (4) (transmitter part) is activated cyclically during a brief instant and then put at rest, the disposition being such (Figs. 12, 13) that the reception circuit, if it is in the capture zone of an interrogator (1) can give a signal to the control circuit, which will activate the internal circuits of the toll circuits (D) in order to permit the analysis of the interrogation message and in function of the result of that decoding, the response circuits will be activated or not.

43. A system according to any one of claims 2 to 42, characterised in that the transmitter part (B) may elsewhere serve as interface for the reception of other equipment installed on the vehicles (2), as far as the signal be compatible with the reception circuits.

Fig 1a

Fig 1b

Fig 2

Fig 3a

Fig 3b

Fig 4

FIG 5

FIG 6

EP 0 401 192 B1

35

FIG 7

EP 0 401 192 B1

FIG 8

FIG 9

FIG 10

RAM MEM 127

129

BAT 128

+ U_b

136

ROM MEM 126

µC

124

125

143

140

144

134

133

135

132

121

122

123

138

139

137

112

142

111

116

109

131

107

110

141

106

108

105

104

103

101

102

114

113

100

115

120

141

117

130

118

119

131

141

GND

A

B

C

D

E

FIG 11

FIG 12

FIG 13

Pu    TX    R1    TA

$t_p$   $t_r$   $t_s$

FIG 14a

FIG 14b

FIG 15

FIG 16a

FIG 16b

FIG 16c